# EUROPÄISCHE PATENTSCHRIFT

(11) **EP 0 502 821 B1**
(45) Veröffentlichungstag und Bekanntmachung des Hinweises auf die Patenterteilung: **31.01.1996**
(21) Anmeldenummer: 92810136.9
(22) Anmeldetag: 25.02.1992
(51) Int. Cl.: C07F 7/08, C07F 7/18, C08K 5/54, C09D 7/12, C08G 77/26, C09D 133/04

(54) **Silylierte 2-(2-Hydroxyphenyl)-4,6-diaryl-1,3,5-triazine**
Silylated 2-(2-hydroxyphenyl)-4,6-diaryl-1,3,5-triazine
2-(2-Hydroxyphenyl)-4,6-diaryl-1,3,5-triazine silylé

(30) Priorität: 05.03.1991 CH 655/91
(43) Veröffentlichungstag der Anmeldung: 09.09.1992
(73) Patentinhaber: CIBA-GEIGY AG, CH-4002 Basel (CH)
(72) Erfinder: Meuwly, Roger, Dr., CH-1723 Marly (CH); Slongo, Mario, Dr., CH-1712 Tafers (CH); Valet, Andreas, Dr., W-7859 Eimeldingen (DE)

(56) Entgegenhaltungen:
- EP-A- 0 339 262
- EP-A- 0 389 427
- EP-A- 0 461 071

## Beschreibung

Die Erfindung betrifft 2-Hydroxyphenyl-s-triazine mit einem siliziumhaltigen Rest in 4-Stellung der 2-Hydroxyphenylgruppe und ihre Verwendung als Stabilisatoren für organische Polymere.

2-(2-Hydroxyphenyl)-4,6-diaryl-1,3,5-triazine sind UV-Absorber und können daher als Lichtstabilisatoren verwendet werden. In der4-Stellung des 2-Hydroxyphenylrestes befindet sich üblicherweise eine durch Alkyl oder Acyl substituierte Hydroxylgruppe (US-A-3 118 887, US-A-3 249 608). Solche Verbindungen wurden vor allem zur Lichtstabilisierung von Polymeren vorgeschlagen. In Formkörpern aus damit stabilisierten Polymeren verhindert der in den Außenschichten des Formkörpers enthaltene UV-Absorber das Eindringen von kurzwelligem Licht in das Innere des Formkörpers.

Es wurde nunmehr gefunden, daß sich bestimmte 2-Hydroxyphenyl-s-triazine, die mit einer siliziumhaltigen Gruppe substituiert sind, besonders gut als Lichtstabilisatoren eignen. Die Triazinverbindungen sind neue Verbindungen und entsprechen der Formel la oder der Formel lb 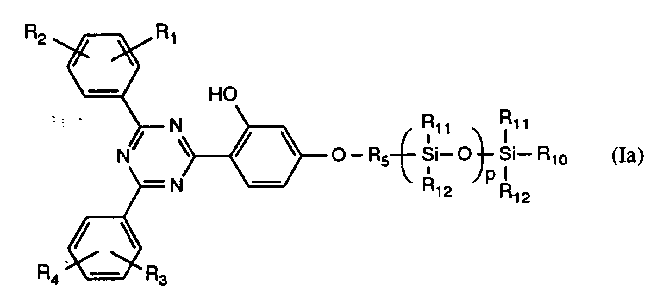 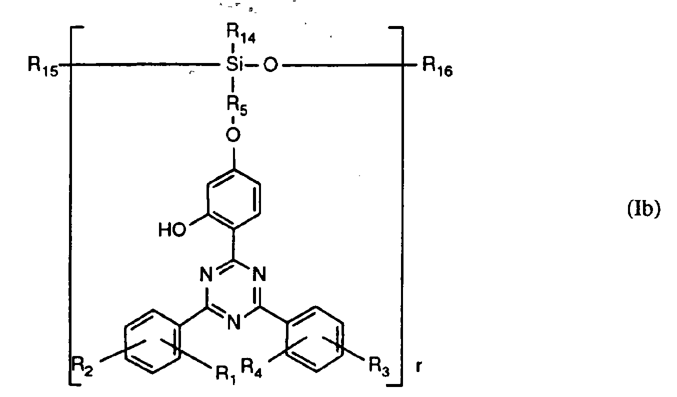 worin p 0 oder eine Zahl von 1-50 ist, r eine Zahl von 1-50 ist, R, und R₃ unabhängig voneinander Wasserstoff, OH, C₁-C₁₂-AlkyloderCyclohexyl bedeuten, R₂ und R₄ unabhängig voneinander Wasserstoff, OH, C₁-C₁₂-Alkyl, C₁-C₁₈-Alkoxy, Halogen oder eine Gruppe -O-ll bedeuten, 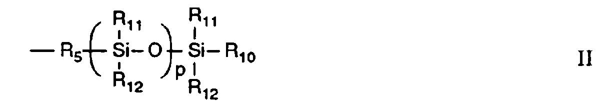 R₅ eine direkte Bindung oder eine zweiwertige Gruppe einer der folgenden Formeln ist: -CₘH₂ₘ,-(CH₂)ₘ-O-, - (CH₂)m-O-R₆-, -(CH₂)ₘ-CO-X-(CH₂)n-, -(CH₂)ₘ-CO-X-(CH₂)ₙ-O-, 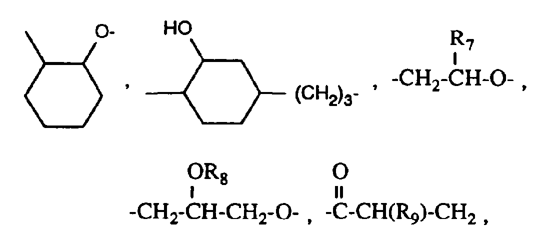 -CH₂-CH(OH)-CH₂-Y-(CH₂)ₘ-,
worin m und n unabhängig voneinander 1-4 sind,
R₆ C₁-Cᵢ₂-Alkylen, Cyclohexylen oder Phenylen bedeutet,
R₇ C₁-C₁₂-Alkyl, C₅-C₈-Cycloalkyl, Phenyl, C₂-C₁₃-Alkoxymethyl; C₆-C₉-Cycloalkoxymethyl oder Phenoxymethyl bedeutet,
R₈ eine Gruppe der Formel II bedeutet,
Rg Wasserstoff oder Methyl ist,
X -O- oder -NR₁₃- bedeutet, worin R₁₃ Wasserstoff, C₁-C₁₂-Alkyl, Phenyl oder eine Gruppe -(CH₂)₃-II oder - (CH₂)₃-O-ll bedeutet,
Y-O- oder -NH- bedeutet,
R₁₀, R₁₁ und R₁₂ unabhängig voneinander C₁-C₁₈-Alkyl, Cyclohexyl, Phenyl oder C₁-C₁₈-Alkoxy bedeuten und im Fall, daß R₂ und R₄ nicht eine Gruppe -O-ll sind, R₁₀ und/oder R₁ auch eine Gruppe der Formel lll 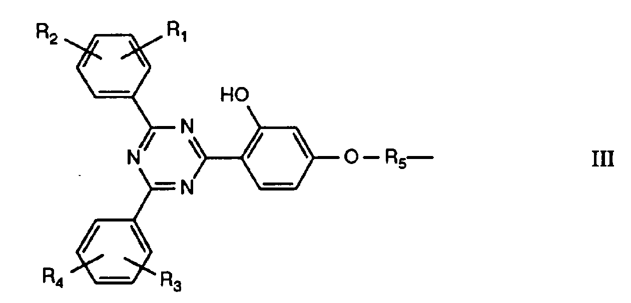 sein können,
R₁₄ C₁-C₁₂-Alkyl, C₅-C₈-Cycloalkyl oder Phenyl bedeutet, und
R₁₅ Hydroxy oder C₁-C₄-Alkoxy und R₁₆ Wasserstoff oder C₁-C₄-Alkyl bedeutet, oder,
im Fall daß r größer als 2 ist, R₁₅ und R₁₆ zusammen die Bedeutung einer direkten Bindung haben können.

Wenn in Formel la oder Formel lb einer der Substituenten R₁, R₂, R₃, R₄, R₇, R₈ und R₁₄ C₁-C₁₂-Alkyl ist, so kann das eine lineare oder verzweigte Alkylgruppe sein. Beispiele hierfür sind Methyl, Ethyl, n-Propyl, i-Propyl, n-Butyl, t-Butyl, Pentyl, Hexyl, Octyl, 2-Ethylhexyl, Nonyl, Decyl oder Dodecyl. R₁₀ R₁₁ und R₁₂ als C₁-C₁₈-Alkyl können darüber hinaus auch z.B. Tetradecyl, Hexadecyl oder Octadecyl sein.

R₇ und R₁₄ als C₅-C₈-Cycloalkyl können z.B. Cyclopentyl, Cyclohexyl oder Cyclooctyl sein, insbesondere Cyclohexyl.

R₂, R₄, R₁₀, R₁₁ und R₁₂ als C₁-C₁₈-Alkoxy können lineare oder verzweigte Alkoxygruppen sein. Beispiele hierfür sind Methoxy, Ethoxy, Isopropoxy, Butyloxy, Hexyloxy, Octyloxy, Decyloxy, Dodecyloxy oder Octadecyloxy.

R₁₀, R₁₁ und R₁₂ sind vorzugsweise C₁-C₄-Alkyl oder C₁-C₄-Alkoxy, R₁₄ bevorzugt Cᵢ-C₄-Alkyl.

R₆ als C₁-C₁₂-Alkylen kann eine lineare oder verzweigte Alkylengruppe sein. Beispiele hierfür sind Methylen, Dimethylen, 1,2-Propylen, Trimethylen, 2,2-Dimethyltrimethylen, Tetra-, Hexa-, Octa- oder Dodekamethylen.

Bevorzugt sind Verbindungen der Formel la, worin R₅ eine direkte Bindung oder eine zweiwertige Gruppe einer der folgenden Formeln ist: -(CH₂)m-, -(CH₂)ₘ-O-, -(CH₂)ₘ,-O-R₆- -(CH₂)ₘ-CO-X-(CH₂)ₙ-, -(CH₂)ₘ-CO-X-(CH₂)ₙ-O-, 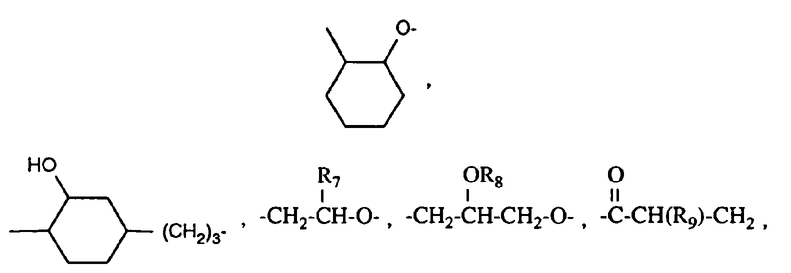 -CH₂-CH(OH)-CH₂-Y-(CH₂)ₘ-, worin m und n unabhängig voneinander 1-4 sind..

Ebenfalls bevorzugt sind Verbindungen der Formel la oder der Formel lb, worin R₁, R₂, R₃ und R₄ unabhängig voneinander Wasserstoff oder Methyl bedeuten. Besonders bevorzugt sind 2-(2-Hydroxyphenyl)-s-triazine der Formel la oder der Formel lb, deren 4-und 6-Position durch eine Phenyl, p-Tolyl oder2,4-Dimethylphenylgruppe substituiert sind.

Die erfindungsgemäßen Verbindungen enthalten am Siliziumatom bevorzugt C₁-C₈-Alkyl, Phenyl oder C₁-C₈-Alkoxy als Substituenten R₁₀, R₁₁ und R₁₂, und C₁-C₈-Alkyl oder Phenyl als R₁₄, oder R₁₀ oder/und R₁₁ ist eine Gruppe der Formel lll. Besonders bevorzugt sind Verbindungen, worin R₁₀ R₁₁ und R₁₂ C₁-C₄-Alkyl oder C₁-C₄-Alkoxy und R₁₄ C₁-C₄-Alkyl bedeuten.

Die Hydroxyphenyltriazin-Gruppe ist durch die Gruppe Rₛ mit dem Silylrest verbunden. Bevorzugt ist Rₛ eine der Gruppen -CₘH₂ₘ-, -(CH₂)ₘ-O-, -(CH₂)ₘ-CO-X-(CH₂)ₙ-, 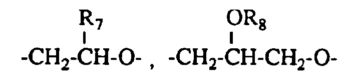 oder -CH₂-CH(OH)-CH₂-Y-(CH₂)m-, worin m 1,2 oder 3 ist, R₇ Methyl, Phenyl, C₃-C₉-Alkoxymethyl oder Phenoxymethyl bedeutet, R₈ eine Gruppe der Formel ll ist und X und Y jeweils Sauerstoff bedeuten.

Besonders bevorzugt sind Verbindungen der Formel la oder der Formel lb, worin R₅ eine der Gruppen -CₘH₂ₘ-, - (CH₂)₂-O-, -CH₂-CO-O-CH₂- , -CH₂-CH(O-C₄H₉)-O-, 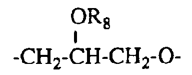 oder -CH₂-CH(OH)-CH₂-O-(CH₂)₃- bedeutet, m eine der Zahlen 1, 2 oder 3 und R₈ ein Rest 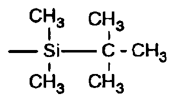 ist.

Bevorzugt sind die Verbindungen der Formel la, worin p null ist.

Besonders bevorzugt sind die Verbindungen der Formel la oder der Formel lb, worin R1, R₂, R₃ und R₄ unabhängig voneinander Wasserstoff oder Methyl bedeuten und jeweils in o- und/oder p-Stellung stehen, p die Zahl null, R₅-(CH₂)₃-, R₁₀ Methyl oder Ethyl, R₁₁ und R₁₂ Ethyl oder Ethoxy, R₁₄ Methyl, und R₁₅ -OH, Methoxy oder Ethoxy, R₁₆ Wasserstoff, Methyl oder Ethyl bedeutet, oder, im Fall daß r größer als 2 ist, R₁₅ und R₁₆ zusammen die Bedeutung einer direkten Bindung haben können.

Beispiele für Verbindungen der Formel la sind die folgenden Verbindungen:
Z-O-(CH₂)₃-Si(CH₃)_{3:}
Z-O-(CH₂)₃-Si(C₄H₉)(CH₃)₂;
Z-O-(CH₂)₂-O-Si(C₆H₅)(CH₃)₂;
Z-O-(CH₂)₃-O-(CH₂)₃-Si(CH₃)(OCH₃)₂;
Z-O-(CH₂)₂-O-CH₂-Si(CH₃)₃;
Z-O-CH₂COO-(CH₂)₃-Si(C₂H₅)₃;
Z-O-CH₂CH₂CONH-(CH₂)₃-Si(C₃H₇)₃;
Z-O-CH₂COO-CH₂CH₂O-Si(C₆H₅)(CH₃)₂; 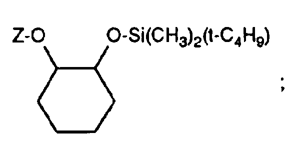 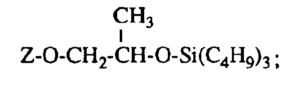 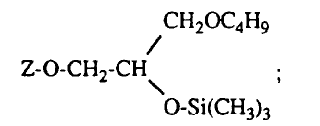 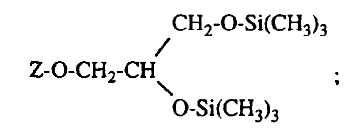 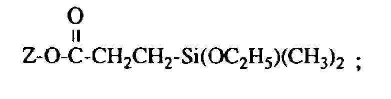 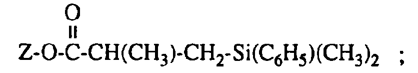
Z-O-CH₂-CH(OH)-CH₂-O-(CH₂)₃-Si(C₂H₅)₃;
Z-O-CH₂-CH(OH)-CH₂-NH-(CH₂)₃-Si(CH₃)₂(C₆H₅);
Z-O-CH₂-CH(OH)-CH₂-N[(CH₂)₃-Si(C₂H₅)₃]₂; 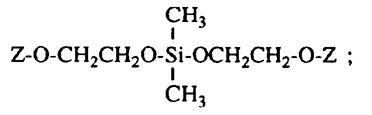 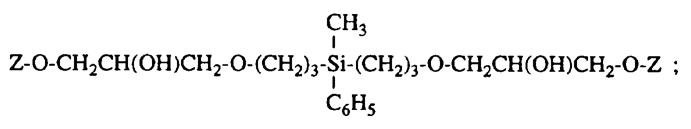 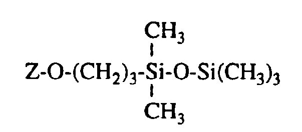
Z-O-(CH₂)₃-O-(CH₂)₃-Si(CH₃)₂-O-Si(CH₃)₃, 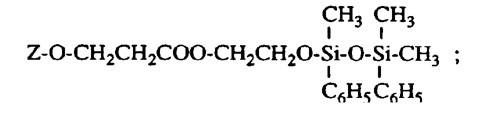 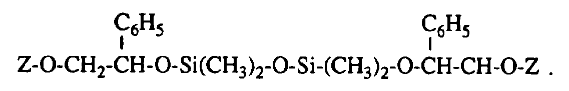
Darin bedeutet Z eine Gruppe 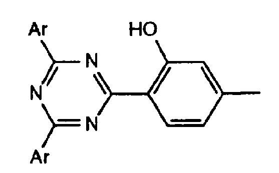 worin Ar Phenyl, p-Tolyl oder 2,4-Dimethylphenyl ist.

Die Synthese der Verbindungen der Formel la hängt vom jeweiligen Bindeglied R₅ ab, mit dem die Triazinylgruppe und die Silylgruppe verknüpft ist. Im folgenden werden Herstellungsmöglichkeiten für jeden Typ von R₅ aufgeführt.
1) Wenn Rₛ eine Gruppe -Cₘ,H₂ₘ,- ist: 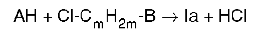 Darin bedeutet A eine Triazingruppe der Formel 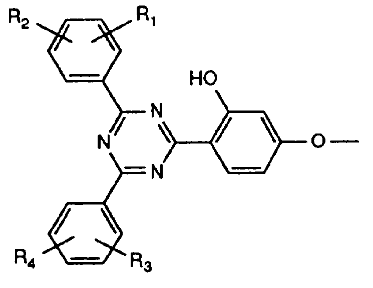 und B eine Silylgruppe der Formel 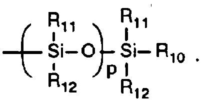 Eine alternative Synthese verläuft nach dem Schema: 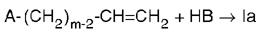
2) Wenn R₅ eine Gruppe -(CH₂)ₘ-O- ist: 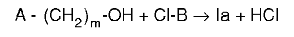
3) Wenn R₅ eine Gruppe -(CH₂)ₘ,-O-R₆- ist: 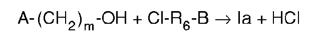
4) Wenn R₅ eine Gruppe -(CH₂)ₘ-CO-X-(CH₂)ₙ- ist: 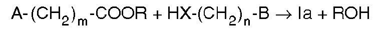 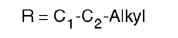
5) Wenn R₅ eine Gruppe -(CH₂)ₘ-CO-X-(CH₂)ₙ-O- ist: 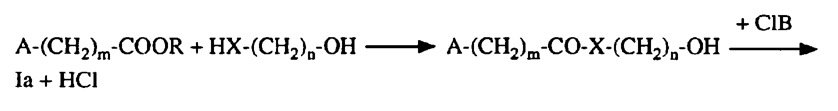
6) Wenn R₅ eine Gruppe 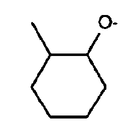 ist: 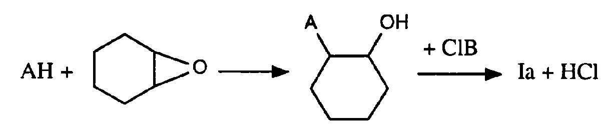
7) Wenn R₅ eine Gruppe -CH₂-CH(R₇)-O- ist: 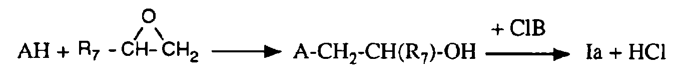
8) Wenn R₅ eine Gruppe -CH₂-CH(OR₈)-CH₂O- ist: 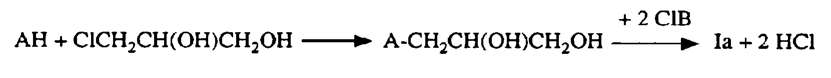
9) Wenn R₅ eine Gruppe 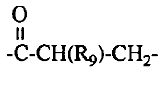 ist: 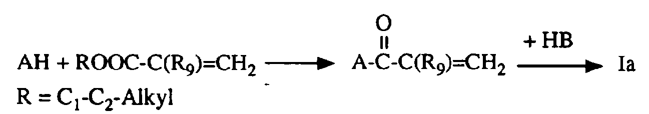 oder alternativ: 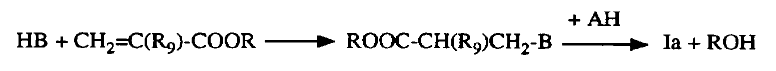
10) Wenn R₅ eine Gruppe -CH₂CH(OH)-CH₂-Y-(CH₂)ₙ- ist:

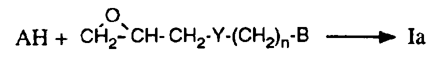

Die Reaktionen werden in an sich bekannter Weise ausgeführt Sie können mit oder ohne Lösungsmittel ausgeführt werden. Die Reaktionen, bei denen HCI entsteht, werden vorzugsweise in Gegenwart einer äquivalenten Menge einer Base, beispielsweise eines tertiären Amins, ausgeführt. Umesterungen werden vorzugsweise in Gegenwart basischer (nukleophiler) Katalysatoren und unter Abdestillieren des gebildeten ROH ausgeführt. Additionen olefinischer Gruppen an Hydrogensilane können z.B. in Gegenwart von katalytischen Mengen Chloroplatinwasserstoffsäure ausgeführt werden.

Wenn auch R₁₀ eine Gruppe der Formel lll ist, so werden die obigen Reaktionen mit einem Dichlorsilan oder Dihydrogensilan bzw. mit einem α,ω-Dihydrogon- oder Dichlorpolysiloxan ausgeführt unter Zugabe von 2 Aequivalenten des Triazinderivates.

Wenn R₁₁ eine Gruppe der Formel lll ist und p grösser als 1 ist, so können solche Verbindungen durch Hydrolyse und Kondensation von entsprechenden Dialkoxy- oder Dichlorsilanen der Formel 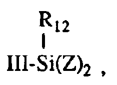 worin Z = Cl oder C₁-C₄-Alkoxy, hergestellt werden.

Verbindungen der Formel lb, worin r größer als 1 ist, lassen sich beispielsweise durch Hydrolyse und Kondensation von entsprechenden Dialkoxy- oder Dichlorsilanen der Formel IV 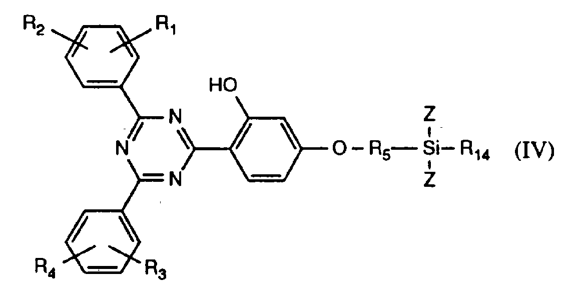 erhalten, worin Z für C₁-C₄-Alkoxy oder ein Chloratom steht. Die Reaktion kann ebenfalls in an sich bekannter Weise ausgeführt werden, beispielsweise durch Zusatz von Basen wie z.B. Alkalihydroxiden zu einer Lösung der Verbindung der Formel IV und Erwärmen.

Die Herstellung der Verbindungen der Formel lb, worin r = 1 ist, sowie der Verbindungen der Formel IV kann nach den Methoden erfolgen, die oben für die Herstellung der Verbindungen der Formel la beschrieben sind.

Verbindungen der Formel la, worin p null ist und R₁₀, R₁₁ und R₁₂ Alkoxy bedeuten, können ebenfalls in der oben beschriebenen Reaktion eingesetzt werden. Dazu werden die genannten Verbindungen der Formel la zunächst hydrolisiert, wobei dessen Si-Alkoxy-Bindungen unter Bildung von Hydroxylgruppen gespalten werden. Zwei Moleküle des so gebildeten Zwischenproduktes mit freien Si-OH Funktionen gehen schnell eine Kondensationsreaktion ein. So bilden sich zunächst dimere, im weiteren Verlauf der Reaktion oligomere Produkte, wobei ein Siliziumatom der monomeren Ausgangsverbindung im Verlauf der Reaktion über jeweils eine Sauerstoffbrücke mit einer, zwei oder drei Einheiten der Ausgangsverbindung verknüpft werden kann. Die oligomeren Produkte enthalten nach Beendigung der Reaktion 2 bis 50, vorzugsweise 3 bis 10 Einheiten der Ausgangsverbindung. Der langsamere, geschwindigkeitsbestimmende Schritt der Reaktion ist die Hydrolyse unter Abspaltung des entsprechenden Alkylalkohols.

Die Reaktion kann in an sich bekannter Weise durchgeführt werden. Zweckmäßig wird die Ausgangsverbindung der Formel la mit mindestens 0,3 Äquivalenten bezogen auf die Ausgangsverbindung eines Hydrolysereagens versetzt, wobei geringe Mengen Wasser zugegen sein müssen. Als Hydrolysereagenzien eignen sich Säuren oder Basen, beispielsweise Schwefelsäure, Phosphorsäure oder eine Halogenwasserstoffsäure als Säuren oder Alkalimetallhydroxide, Calciumhydroxid, Ammoniak oder Amine als Basen. Bevorzugt ist Salzsäure (HCI). Sowohl die Ausgangsverbindung als auch das Hydrolysereagens sollen in flüssiger Form vorliegen, gegebenenfalls als Lösung in einem Lösungsmittel. Sofern die Ausgangsverbindung in einem Lösungsmittel vorgelegt wird, eignen sich als solches besonders aromatische Lösungsmittel oder Ether, beispielsweise Diglyme (Bis[2-methoxyethyl]ether), Tetrahydrofuran, Dioxan, Toluol, Benzol oder Xylole. Die Ausgangsverbindung kann beispielsweise als 10 %ige Lösung vorliegen. Das Hydrolysereagens wird bevorzugt in konzentrierter wässriger Lösung eingesetzt Die Temperaturführung der Reaktion ist nicht kritisch, beispielsweise kann die Temperatur zwischen 0°C und 150°C liegen. Bevorzugt liegt die Temperatur während der Reaktion im Bereich von 50 °C und 150 °C, beispielsweise bei 100 °C oder, gegebenenfalls, an oder nahe bei dem Siedepunkt des Lösungsmittels. Die Aufarbeitung kann, sofern ein flüchtiges Hydrolysereagens eingesetzt wird, durch Eindampfen erfolgen. Anderenfalls kann das Produkt mit einem geeigneten organischen Lösungsmittel, beispielsweise Hexan, aus der Reaktionsmischung bezw. aus dem nach dem Eindampfen erhaltenen Rückstand gelöst und aus dieser Lösung durch Einengen erhalten werden.

So erhaltene, dreidimensional vernetzte oligomere Produkte weisen ähnliche Eigenschaften auf wie die Verbindungen der Formel Ib. Gegenstand der Erfindung ist daher auch ein Gemisch oligomerer Verbindungen, erhältlich durch Hydrolyse und Kondensation von Verbindungen der Formel la, worin p null ist und Rᵢₒ, R₁₁ und R₁₂ C₁-C₁₈-Alkoxy bedeuten.

Die Ausgangsverbindungen für die Reaktionen 1-9 sind bekannte Verbindungen Einige von ihnen sind im Handel erhältlich.

Weitere Details zur Herstellung der Verbindungen der Formel la oder der Formel lb können den Beispielen entnommen werden.

Die Verbindungen der Formel la und der Formel lb können vorteilhaft als Stabilisatoren für organische Polymere gegen deren Schädigung durch Licht, Sauerstoff und Wärme verwendet werden. Die Erfindung betrifft daher auch ein Verfahren zum Stabilisieren organischer Polymere gegen Schädigung durch Licht, Sauerstoff und Wärme, dadurch gekennzeichnet, daß man diesen Materialien mindestens eine Verbindung der Formel la und/oder der Formel lb beimischt. Beispiele für solche zu stabilisierenden Polymere sind:
1. Polymere von Mono- und Diolefinen, beispielsweise Polypropylen, Polyisobutylen, Polybuten-1, Polynethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-l-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1)genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere -Copolymere und deren Mischungen mit anderen Polymeren wie z.B. Polyamiden.
3a. Kohlenwasserstoffharze (z.B. C_{S}-Cg) inklusive hydrierte Modifikationen davon (z.B. Klebrigmacherharze) und Mischungen von Polyalkylenen und Stärke.
4. Polystyrol, Poly-(p-methylstyrol), Poly-(a-methylstyrol).
5. Copolymere von Styrol oder a-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol
6. Pfropfcopolymere von Styrol oder a-Methylstyrol, wie z.B. Styrol auf Polybutadien, Styrol auf Polybutadien-Styrol-oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von a,ß-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
13. Polyphenylenoxide und -sulfide und deren Mischungen mit Styrolpolymeren oder Polyamiden.
14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
16. Polyharnstoffe, Polyimide, Polyamid-imide und Polybenzimidazole.
17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
23. Vernetzbare Acrylharze, die sich von substituierten Acrylsäureestern ableiten, wie z.B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bis-glycidylethern oder von cycloaliphatischen Diepoxiden.
26. Natürliche Polymere, wie Cellulose, Naturkautschuk, Gelatine, sowie deren polymer-homolog chemisch abgewandelte Derivate, wie Celluloseacetate, -propionate und -butyrate, bzw. die Celluloseether, wie Methylcellulose; sowie Kolophoniumharze und Derivate.
27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA6.6 und Copolymere, PA/HDPE, PA/PP, PA/PPO.

Besonders bevorzugt ist die Verwendung der erfindungsgemäßen Verbindungen als Stabilisatoren in Lacken aller Art. Dies bedeutet auch ein Verfahren gemäß obiger Beschreibung, worin das organische Polymer ein Bindemittel für einen Lack ist. Bei den Lacken kann es sich um pigmentierte oder unpigmentierte Lacke oder Metalleffektlacke handeln. Sie können ein organisches Lösungsmittel enthalten oder lösungsmittelfrei sein oder wässrige Lacke sein.

Die Lacke können als Bindemittel mindestens eines der vorhin aufgeführten Polymeren enthalten. Beispiele für Lacke mit speziellen Bindemitteln sind die folgenden:
1. Lacke auf Basis von kalt- oder heiß-vernetzbaren Alkyd-, Acrylat-, Polyester-, Epoxid- oder Melaminharzen oder Mischungen solcher Harze, gegebenenfalls mit Zusatz eines sauren Härtungskatalysators;
2. Zweikomponenten-Polyurethanlacke auf Basis von hydroxylgruppenhaltigen Acrylat-, Polyester- oder Polyetherharzen und aliphatischen oder aroma- tischen Polyisocyanaten;
3. Einkomponenten-Polyurethanlacke auf Basis von blockierten Polyisocyanaten, die während des Einbrennens deblockiert werden;
4. Zweikomponentenlacke auf Basis von (Poly)ketiminen und aliphatischen oder aromatischen Polyisocyanaten;
5. Zweikomponentenlacke auf Basis von (Poly)ketiminen und einem ungesättigten Acrylatharz oder einem Polyacetoacetatharz oder einem Methylacrylamidoglykolatmethylester;
6. Zweikomponentenlacke auf Basis von carboxyl- oder aminogruppenhaltigen Polyacrylaten und Polyepoxiden;
7. Zweikomponentenlacke auf Basis von anhydridgruppenhaltigen Acrylatharzen und einer Polyhydroxy- oder Polyaminokomponente;
8. Zweikomponenten lacke auf Basis von (Poly)oxazolidinen und anhydridgruppenhaltign Acrylatharzen oder ungesättigten Acrylatharzen oder aliphatischen oder aromatischen Polyisocyanaten.
9. Zweikomponentenlacke auf Basis von ungesättigten Polyacrylaten und Polymalonaten;
10. thermoplastische Polyacrylatlacke auf Basis von thermoplastischen Acrylatharzen oder fremdvernetzenden Acrylatharzen in Kombination mit veretherten Melaminharzen;
11. Lacksysteme auf Basis siloxanmodifizierter oder fluormodifizierter Acrylatharze.

Die Lacke können auch strahlenhärtbare Lacke sein. In diesem Fall besteht das Bindemittel aus monomeren oder oligomeren Verbindungen, die ethylenische Doppelbindungen enthalten und durch Bestrahlung mit aktinischem Licht oder mit Elektronenstrahlen in eine vernetzte hochmolekulare Form übergehen. Meist handelt es sich hierbei um ein Gemisch solcher Verbindungen.

Die Lacke können als Einschicht- oder Zweischichtlacke appliziert werden, wobei die erfindungsgemäßen Stabilisatoren vorzugsweise der unpigmentierten obersten Schicht zugesetzt werden.

Die Lacke können auf die Substrate (Metall, Plastik, Holz etc ) nach den üblichen Verfahren aufgebracht werden, beispielsweise durch Streichen, Besprühen, Gießen, Tauchen oder Elektrophorese.

Die Menge des zugesetzten Stabilisators der Formel la und/oder der Formel lb hängt vom jeweiligen Substrat und dessen Verwendungszweck ab. Im allgemeinen genügen Mengen von 0,01 bis 5 Gew.-%, bevorzugt verwendet man 0,05 bis 3 Gew.-%, bezogen auf das zu stabilisierende Polymer. Erfindungsgemäß sind daher insbesondere Polymere enthaltend 0,01 bis 5 Gew.-%, vor allem 0,05 bis 3 Gew.-%, mindestens einer Verbindung der Formel la und/oder der Formel lb.

In bestimmten Fällen kann es von Vorteil sein, zwei oder mehrere der Verbindungen der Formel la und/oder der Formel lb zu verwenden. Außerdem können ein oder mehrere andere Stabilisatoren und/oder sonstigen Zusatzstoffe mitverwendet werden, wie z.B. die folgenden Typen von Verbindungen:

### 1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Ditert butyl-4-i-butytphenol, 2,6-Di-cyclopentyl-4-methylphenol, 2-(α-Methylcyclohexyl)-4,6-dimethylphenol, 2,6-Di-cctadecyl-4-methylphenol, 2,4,6-Tri-cyclohexylphenol, 2,6-Di-tert.butyl-4-methoxymethylphenol, 2,6-Di-nonyl-4-methylphenol, 2,4-Dimethyl-6-(1'-methyl-undec-1'-yl)-phenol, 2,4Dimethyl-6-(1'-methyl-heptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert.-butylphenol, 2,4-Dioctylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-cctadecyloxyphenol, 2,6-Di-tert.-butyl-hydrochinon, 2,5-Di-tert.-butyl-4-hydroxyanisol, 3,5-Di-tert.-butyl-4-hydroxyanisol, 3,5-Di-tert.-butyl-4-hydroxyphenyl-stearat, Bis-(3,5-di-tert.-butyl-4-hydroxyphenyl)adipat.

1.4. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol), 4,4'-Thio-bis-(3,6-di-sec.-amylphenol), 4,4'-Bis(2,6-dimethyl-4-hydroxyphenyl)-disulfid.

1.5. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(a-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(a-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1 -Bis-(5-tert.butyt-4-hydroxy-2-methyt-phenyt)-3-n-dodecytmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat, 1,1-Bis-(3,5-dimethyl-2-hydroxyphenyl)-butan, 2,2-Bis-(3;5-di-tert.-butyl-4-hydroxyphenyl)-propan, 2,2-Bis-(5-tert.-butyl-4-hydroxy-2-methylphenyl)-4-n-dodecylmer- capto-butan, 1,1,5,5-Tetra-(5-tert.-butyl-4-hydroxy-2-methylphenyl)-pentan.

1.6. O-, N- und S-Benzylverbindunqen, z.B. 3,5,3',5'-Tetra-tert.-butyl-4,4'-dihydroxydibenzylether, Octadecyl-4-hydroxy-3,5-dimethylbenzyl-mercaptoacetat, Tris-(3,5-di-tert.-butyl-4-hydroxybenzyl)-amin, Bis-(4-tert.-butyl-3-hydroxy-2,6-dimethylbenzyl)-dithioterephthalat, Bis-(3,5-di-tert.-butyl-4-hydroxybenzyl )-sulfid, Isooctyl-3,5-di-tert.-butyl-4-hydroxybenzyl-mercaptoacetat.

1.7. Hydroxybenzylierte Malonate, z.B. Dioctadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Didodecylmercaptoethyl-2,2-bis-(3,5-di-tert.-butyl-4-hydroxybenzyl)-malonat, Di-[4-(1,1,3,3-tetramethylbutyl)-phenyl]-2,2-bis-(3,5-di-tert.-butyl-4-hydroxybenzyl)-malonat.

1.8. Hydroxybenzyl-Aromaten, z.B. 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol, 2,4,6-Tris-(3,5-di-tert.-butyl-4-hydroxybenzyl)-phenol.

1.9. Triazinverbindunqen, z.B. 2,4-Bis-octylmercapto-6-(3,5-di-tert.-butyl-4-hydroxyanilino)-1,3,5-triazin, 2-Octyl- mercapto-4,6-bis-(3,5-di-tert.-butyl-4-hydroxyanilino)-1,3,5-triazin, 2-Octylmercapto-4,6-bis-(3,5-di-tert.-butyl-4-hydro- xyphenoxy)-1,3,5-triazin, 2,4,6-Tris-(3,5-di-tert.-butyl-4-hydroxyphenoxy)-1,2,3-triazin, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 2,4,6-Tris-(3,5-di-tert.-butyl-4-hydroxyphenylethyl)-1,3,5-triazin, 1,3,5-Tris-(3,5-di-tert.butyl-4-hydroxyphenylpropionyl)-hexahy- dro-1,3,5-triazin, 1,3,5-Tris-(3,5-dicyclohexyl-4-hydroxybenzyl)-isocyanurat.

1.10. Benzylphosphonate, z.B. Dimethyl-2,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Ca-Salz des 3,5-Di-tert.-butyl-4-hydroxybenzyl-phosphonsäure-monoethyle- sters.

1.11. Acylaminophenole, z.B. 4-Hydroxy-laurinsäureanilid, 4-Hydroxystearinsäureanilid, N-(3,5-di-tert.butyl-4-hydroxyphenyl)-carbaminsäureoctylester.

1.12. Ester der β-(3.5-Di-tert.butyl-4-hydroxyphenyl)-propionsäure mit ein- oder mehrwertigen Alkoholen, wie z. B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.13. Ester der β-(5-tert.Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der 3,5-Di-tert.-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Amide der β-(3,5-Di-tert.butyl-4-hydroxyphenyl)-propionsäure, wie z.B. N,N'-Bis-(3,5-di-tert.butyl-4-hydro- xyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.

### 2. UV-Absorber und Lichtschutzmittel

2.1. 2-(2'-Hydroxyphenyl)-benztriazole, wie z.B. 5'-Methyl-, 3',5'-Di-tert.butyl-, 5'-tert.-Butyl-, 5'-(1,1,3,3-Tetramethylbutyl)-_{;} 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-,3',5'-Bis-(α,α-dimethylbenzyl)-, Mischung aus 5-Chlor-3'-tert.-butyl-5'-(2-octyloxycarbonylethyl)- und 5-Chlor-3'-tert.-butyl-5'-[2-(2-ethylhexyloxy)-carbonylethyl]-, 5-Chlor-3'-tert.-butyl-5'-(2-methoxycarbonylethyl)-, 3'-tert.-Butyl-5'-(2-methoxycarbonylethyl)-, 3'-tert.-Butyl-5'-(2-octyloxycarbonylethyl)-, 3'-tert.-Butyl-5'-[2-(2-ethylhexylo- xy)-carbonylethyl]-,3'-Dodecyl-5'-methyl- und 3'-tert.-Butyl-5'-(2-isooctyloxycarbonylethyl)-2'-hydroxyphenyl-2H-benztriazol(2), 2,2'-Methylen-bis[4-(1,1,3,3-tetramethylbutyl)-6-benztriazol-2-yl-phenol]; Umesterungsprodukt von 2-[3'-tert.-Butyl-5'-(2-methoxycarbonylethyl)-2'-hydroxy-phenyl]-2H-benztriazol mit Polyethylenglycol 300; [R-CH₂CH₂-COO(CH₂)₃]₂
mit R=3'-tert.-Butyl-4'-hydroxy-5'-2H-benzotriazol-2-yl-phenyl.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebonenfalls substituiorten Benzoesäuren, wie z.B. 4-tert.Butyl-phenylsalicylat, Phenylsalicylat, Octylphenyl-salicylat, Dibenzoylresorcin, Bis-(4-tert.butyl-benzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester, 3,5-Di-tert.-butyl-4-hydroxybenzoesäure-octadecylester, 3,5-Di-tert.-butyl-4-hydroxybenzoesäure-2-methyl-4,6-di-tert.-butylphenylester.

2.4. Acrylate, wie z.B. α-Cyan-ß,ß-diphenylacrylsäure-ethylester bzw. -isooctylester, a-Carbomethoxy-zimtsäuremethylester, a-Cyano-ß-methyl-p-methoxy-zimtsäuremethylester bzw. -butylester, a-Carbomethoxy-p-methoxy-zimtsäure-methylester, N-(ß-Carbomethoxy-ß-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäu- re-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethyl-piperidyl)-sebacat, Bis-(2,2,6,6-tetramethyl-pipe- ridyl)-succinat, Bis-(1,2,2,6,6-pentamethylpiperidyl)-sebacat, n-Butyl-3,5-di-tert.butyl-4-hydroxybenzyl-malonsäure-bis (1,2,2,6,6-pentamethyl-piperidyl)-ester, Kondensationsprodukt aus 1-Hydroxyethyl-2,2,6;6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor- 1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl) -2-n-butyl-2-(2-hydroxy-3,5-di-tert -butyl-benzyl)-malonat, 3-n-Octyl-7,7,9,9-tetramethyl-1,3,8-triazasprio[4.5]decan-2,4-dion, Bis-(1-octyloxy-2,2,6,6-tetramethylpiperidyl)-sebacat, Bis-(1-octyloxy-2,2,6,6-tetramethylpiperidyl)-suc- cinat, Kondensationsprodukt aus N,N'-Bis-(2,2,6,6-tetramethyl-4-piperidyl)-hexamethylendiamin und 4-Morpho- lino-2,6-dichlor-1,3,5-triazin, Kondensationsprodukt aus 2-Chlor-4,6-di-(4-n-butylarnino-2,2,6,6-tetramethylpiperidyl) -1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)- 1,3,5-triazin und 1,2-Bis-(3-aminopropylamino)-äthan, 8-Acetyl-3-dodecyl-7,7,9,9-tetramethyl-1,3,8-triazaspiro-[4.5]decan-2,4-dion, 3-Dodecyl-1-(2,2,6,6-tetramethyl-4-piperidyl)pyrrolidin-2,5-dion, 3-Dodecyl-1-(1 ,2,2,6,6-pentamethyl-4-piperidyl)-pyrrolidin-2,5-dion.

2.7. Oxalsäurediamide, wie z.B. 4,4'-Di-octyloxy-oxanilid, 2,2'-Di-octyloxy-5,5'-di-lert.-butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.

2.8.2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphe- nyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin; 2-[2-hydroxy-4-(2-hydroxy-3-octyloxy-propyloxy)phenyl]-4,6-bis(2,4-dimethylphenyl)- 1,3,5-triazin.

3. Metalldesaktivatoren, wie z.B. N,N'-Diphenyloxalsäurediamid, N-Salicylal-N'-salicyloylhydrazin, N,N'-Bis-(sali- cyloyl)-hydrazin, N,N'-Bis-(3,5-di-tert.butyl-4-hydroxyphenylpropionyl )-hydrazi n, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diace- tal-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphil, Bis-(2,4-di-tert.butylphenyl)-pentaerythritdiphosphit, Bis-(2,6-di-tert.-butyl-4-methylphenyl)-pentaerythritdiphosphit, Bis-isodecyloxy-pentaerythritdiphosphit, Bis-(2,4-di-tert.-butyl-6-methylphenyl)-pentaerythritdiphosphit, Bis-(2,4,6-tri-tert.-butylphenyl)-pentaerythritdiphsophit, Tristearyl-sorbit-triphosphit, Tetrakis-(2,4-di-tert.butylphenyl)-4,4'-biphenylen-diphosphonit, 6-Isooctyloxy-2,4,8,10-tetra-tert.-butyl-12H-dibenz[d,g]-1,3,2-dioxaphosphocin, 6-Fluor-2,4,8,10-tetra-tert.-butyl-12-methyl-dibenz[d,g]- 1,3,2-dioxaphosphocin.

5. Peroxidzerstörende Verbindunqen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(ß-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wiez.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

8. Nukleierunqsmittel, wie z.B. 4-tert.Butylbenzoesäure, Adipinsäure, Diphenylessigsäure.

9. Füllstoffe und Verstärkunqsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller Flammschutzmittel, Antistatika, Treibmittel.

Von besonderer Bedeutung sind stabilisierte Polymere, welche einen zusätzlichen Gehalt an einem Lichtschutzmittel aus der Klasse der sterisch gehinderten Amine oder/und aus der Klasse der 2-(2'-Hydroxyphenyl)-benztriazole aufweisen. Unter den sterisch gehinderten Aminen sind insbesondere solche Verbindungen zu verstehen, die im Molekül eine oder mehrere Gruppen der Formel 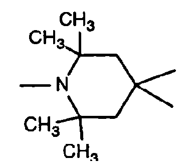 enthalten, wobei diese Verbindungen monomer, oligomer oder polymer sein können. Beispiele für solche Verbindungen sind obigem Punkt 2.6. der Liste von möglichen zusätzlichen Stabilisatoren zu entnehmen.

Der Zusatz der Verbindungen der Formel la oder der Formel lb sowie gegebenenfalls weiterer Zusatzstoffe zu den Polymeren kann vor oder während der formgebenden Verarbeitung der Polymeren erfolgen, beispielsweise durch Mischen in Pulverform oder durch Zusatz zur Schmelze oder Lösung des Polymeren bezw. zu einer geeigneten Lackformulierung, die einen polymeren Binder enthält.

Die Erfindung betrifft daher auch die durch Zusatz mindestens einer Verbindung der Formel la oder der Formel lb stabilisierten Polymeren, die gegebenenfalls noch andere Zusatzstoffe enthalten können Die so stabilisierten Polymeren können in verschiedener Form verwendet werden, wie z.B. als Fasern, Folien, Faserbändchen, Profile, Hohlkörper, Platten, Doppelstegplatten oder als Bindemittel für Lacke, Anstriche, Klebstoffe und Kitte. Von besonderem Interesse ist ihre Verwendung in Lacken.

Die folgenden Beispiele beschreiben die Ausführung der Erfindung näher ohne diese auf die Beispiele beschränken zu wollen. Darin beziehen sich Teile und % auf Gewichtsteile und Gewichts-%.

Beispiel 1: Eine Lösung von 20 g 2-(2,4-Dihydroxyphenyl)-4,6-di(2,4-dimethylphenyl)-1,3,5-triazin, 11,6 g 3-Triethylsilylpropyl-glycidylether und 1,61 g Tetrabutylammoniumbromid in 200 ml Xylol wird unter Rühren 16 h auf 140°C erwärmt. Nach Abkühlen auf Raumtemperatur wird das Reaktionsgemisch filtriert und das Filtrat im Vakuum eingedampft. Der ölige Rückstand wird durch Chromatographie an Kieselgel (Laufmittel Ethylacetat/Hexan 1:10) gereinigt Man erhält 16 g der Verbindung 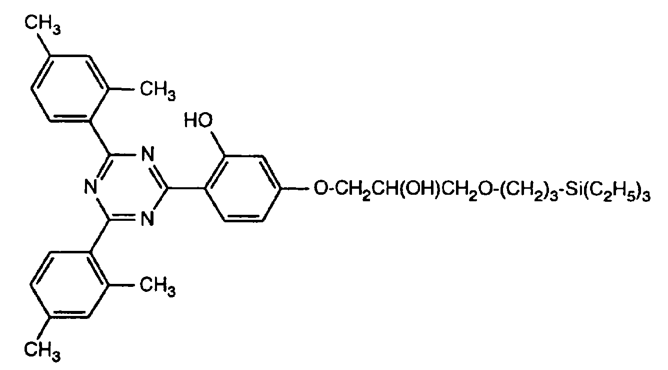 als gelbes Oel.

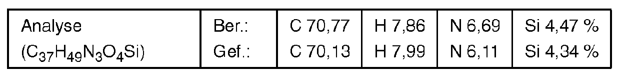

Beispiel 2: Eine Mischung von 16 g 2-[2-Hydroxy-4-(2-hydroxyethoxy)phenyl]-4,6-di(2,4-dimethylphenyl)-1,3,5-triazin, 7,64 g Tert.butyl-dimethylchlorsilan und 6,86 g Imidazol in 100 ml Dimethylformamid wird 24 h bei Raumtemperatur gerührt. Das Reaktionsgemisch wird mit 300 ml Ethylacetat verdünnt und filtriert. Das Filtrat wird im Vakuum eingedampft, der Rückstand durch Chromatographie (wie in Beispiel 1) gereinigt und das erhaltene Kristallisat aus Ethylacetat/Hexan umkristallisiert. Man erhält 9 g der Verbindung 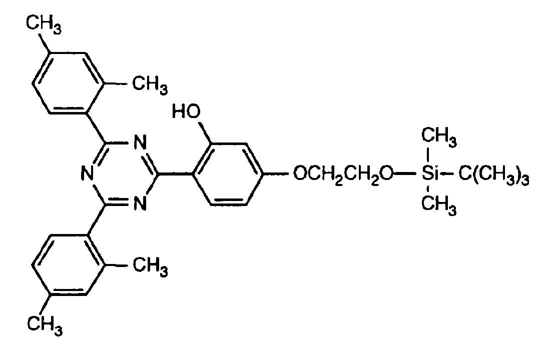 als farblose Kristalle, die bei 131,5-133,9°C schmelzen.

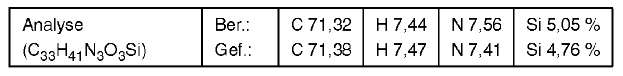

Beispiel 3: Eine Lösung von 40 g 2-(2,4-Dihydroxyphenyl)-4,6-di(2,4-dimethylphenyl)-1,3,5-triazin, 13,1 g 1-Butyl-glycidether und 1,1 g Tetramethylammoniumchlorid in 200 ml Xylol wird unter Stickstoff für 50 h bei 130°C gerührt. Nach Abkühlung auf 20-25°C wird das Reaktionsgemisch auf Kieselgel filtriert und das Filtrat bei reduziertem Druck eingedampft. Man erhält 31,2 g eines gelben Öls.

Zu einer Lösung von 15,0 g des erhaltenen Öls und 4,22 g Imidazol in 100 ml N,N-Dimethylacetamid wird 4,71 g tert.-Butyldimethylchlorsilan getropft, wobei sich die Mischung leicht erwärmt. Die Mischung wird für 12 h auf 20-25°C gehalten und anschließend im Rotationsverdampfer eingeengt. Das so erhaltene Rohprodukt wird chromatographisch (Kieselgel; Hexan/Essigsäure-ethylester = 20/1) gereinigt. Nach Umkristallisieren aus Hexan erhält man 16,0 g der Verbindung der Formel 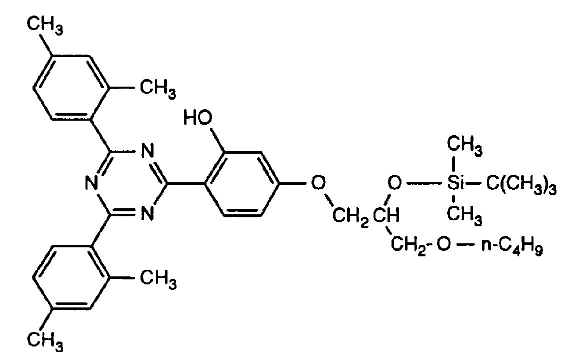 als farblose Kristalle mit dem Schmelzpunkt 104-107°C.

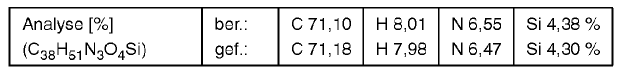

Beispiel 4: Beispiel 3 wird wiederholt, wobei jedoch als Ausgangsprodukt 2-(2,4-Dihydroxyphenyl)-4,6-diphenyl-1,3,5-triazin verwendet wird. Man erhält die Verbindung der Formel 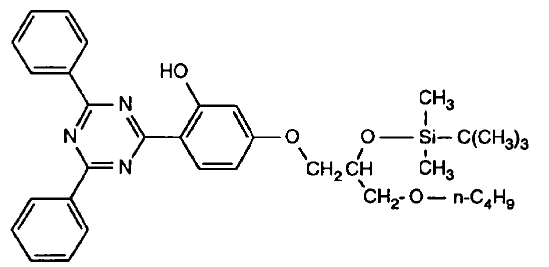 als hellgelbe Kristalle mit dem Schmelzpunkt 107-108°C.

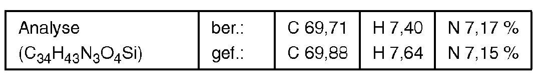

Beispiel 5: Eine Lösung von 70 g 2-(2,4-Dihydroxyphenyl)-4,6-di(2,4-dimethylphenyl)-1,3,5-triazin, 25,9 g Chloressigsäure-ethylester und 48,7 g Kaliumcarbonat in 1000 ml Aceton wird unter Rühren auf 50°C erwärmt. Nach vollständiger Umsetzung wird abgekühlt und filtriert Das Filtrat wird eingeengt und der Rückstand aus Aceton umkristallisiertt. Man erhält 49,0 g eines gelben Produktes.

Eine Suspension von 10,0 g des erhaltenen Produktes, 2,0 g Dibutylzinnoxid und 2,37 g Hydroxymethyl-trimethylsilan in 50 ml Toluol wird unter Rühren für 16 h auf 100°C erwärmt. Nach Abkühlung auf 20-25°C wird das Rohprodukt auf Kieselgel gereinigt. Umkristallisieren aus Hexan führt zu 7,0 g der Verbindung der Formel 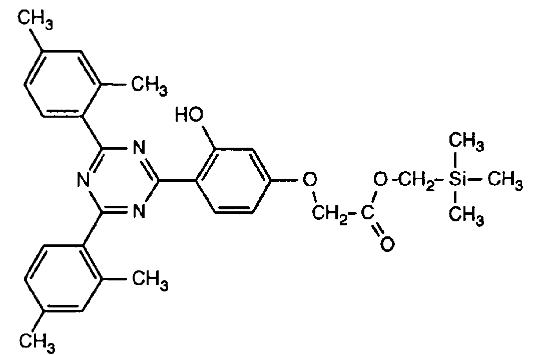 als hellgelbe Kristalle mit dem Schmelzpunkt 101-103°C.

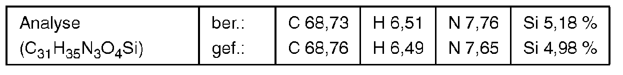

Beispiel 6: Eine Suspension von 11,0 g 2-(2,4-Dihydroxyphenyl)-4,6-di(2,4-dimethylphonyl)-1,3,5-triazin, 5,0 g 3-Chlorpropyltrimethylsilan und 7,1 g Kaliumcarbonat in 100 ml N,N-Dimcthylacetamid wird unter Rühren für 24 h auf 100°C erwärmt. Das abgekühlte Gemisch wird filtriert, das Filtrat eingeengt und der Rückstand mit Essigsäure-ethylester aufgenommen. Die erhaltene Lösung wird mit Wasser und anschließend mit einer gesättigten Natriumchloridlösung gewaschen. Der nach Trocknen mit MgS0₄, Abfiltrieren und Eindampfen verbleibende Rückstand wird aus Hexan umkristallisiert. Man erhält 10,2 g der Verbindung der Formel 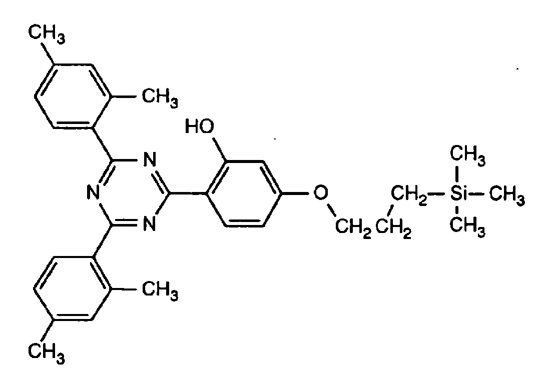 als farblose Kristalle mit dem Schmelzpunkt 147-149°C.

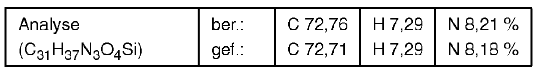

Beispiel 7: Beispiel 6 wird wiederholt, wobei jedoch als Ausgangsprodukt 2-(2,4-Dihydroxyphenyl)-4,6-diphenyl-1,3,5-triazin verwendet wird. Man erhält die Verbindung der Formel 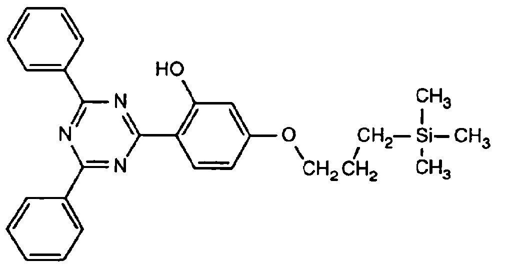 als hellgelbe Kristalle vom Schmelzpunkt 142-143°C.

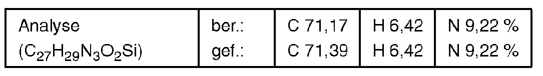

Beispiel 8: Eine Lösung von 20 g 2-(2,4-Dihydroxyphenyl)-4,6-di(2,4-dimethylphenyl)-1,3,5-triazin, 6,6 g 3-Chlor-1,2-propandiol und 12,5 g Kaliumcarbonat in 150 ml N,N-Dimethylacetamid wird unter Rühren für 24 h auf 100°C erwärmt. Das abgekühlte Gemisch wird filtriert, das Filtrat eingeengt und der Rückstand mit Dichlormethan aufgenommen. Die erhaltene Lösung wird mit Wasser und anschließend mit einer gesättigten Natriumchloridlösung gewaschen. Nach Trocknen mit MgSO_{4;} Abfiltrieren und Eindampfen erhält man 8,0 g eines hellgelben Produktes.

Das erhaltene Produktwird mit5,6 gtert.-Butyldimethylchlorsilan und 5,06 g Imidazol in 50 ml N,N-Dimethylacetamid für 20 h bei einer Temperatur von 20-25°C gerührt. Anschließend wird die Reaktionslösung eingedampft. Der Rückstand wird mit Essigsäure-ethylester aufgenommen, filtriert, das Filtrat eingeengt und aus Isopropanol umkristallisiert. Man erhält 7,9 g der Verbindung der Formel 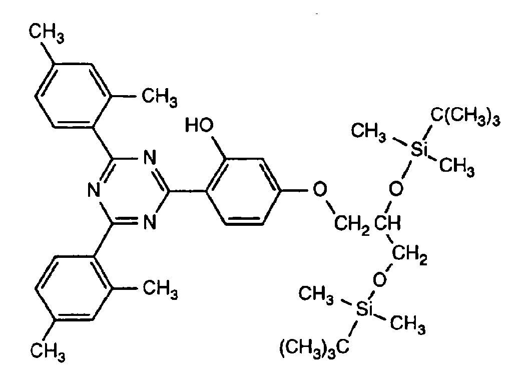 als hellgelbe Kristalle vom Schmelzpunkt 83-88°C.

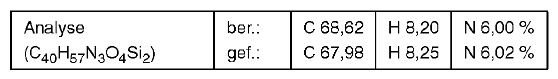

Beispiel 9a: Zu einer Suspension von 50 g 2-(2,4-Dihydroxyphenyl)-4,6-di(2,4-dimethylphenyl)-1,3,5-triazin und 32 g Kaliumcarbonat in 100 ml N,N-Dimethylacetamid wird tropfenweise unter Rühren 27,6 g 3-Chlorpropylmethyldimethoxysilan zugesetzt. Die Mischung wird unter Rühren für 15 h auf 100°C erwärmt. Das abgekühlte Gemisch wird eingeengt und der Rückstand chromatographisch (Kieselgel; Hexan/Essigsäure-ethylester = 10/1) gereinigt. Man erhält die Verbindung der Formel 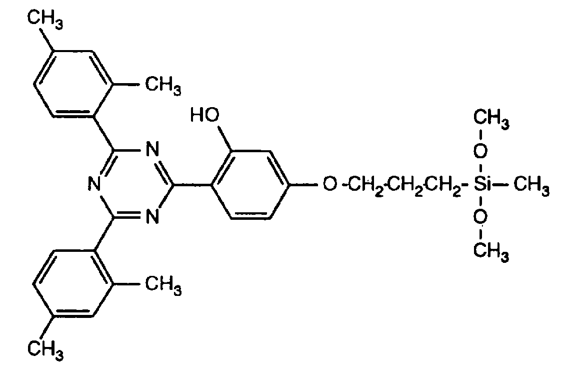 als hellgelbes Öl.

Beispiel 9b: Eine Lösung von 10 g des Produktes aus Beispiel 9a und 0,96 g einer wässrigen 33 % NaOH-Lösung in 20 ml Diglyme wird für 24 h bei einer Temperatur von 120°C gerührt. Die Reaktionslösung wird chromatographisch (Kieselgel; Essigsäureethylester) gereinigt. Man erhält 9,0 g eines Gemisches von Oligomeren als hellgelbes Harz, M̅ₙ = 2000 g/Mol, M̅_{w} = 2300 g/Mol, mit einer Hauptkomponente der Formel

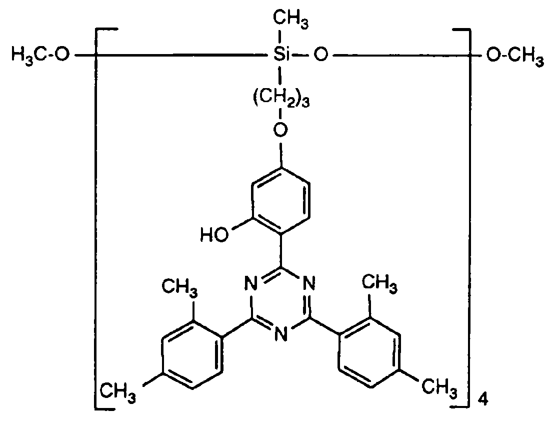

Beispiel 10: Zu einer Suspension von 25 g 2-(2,4-Dihydroxyphenyl)-4,6-di(2,4-dimethylphenyl)-1,3,5-triazin und 16 g Kaliumcarbonat in 100 ml N,N-Dimethylacetamid werden tropfenweise unter Rühren 9,3 g (1-Chlorethyl)trimethylsilan zugesetzt. Die Mischung wird unter Rühren für 24 h auf 100°C erwärmt. Das abgekühlte Gemisch wird eingeengt und der Rückstand chromatographisch (Kieselgel; Hexan/Essigsäure-ethylester = 50/1) gereinigt. Nach Umkristallisieren aus Toluol erhält man 9,8 g der Verbindung der Formel 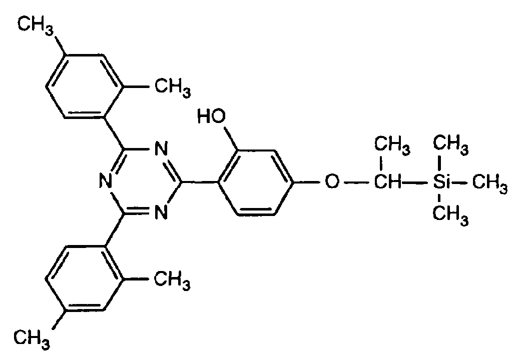 als hellgelbe Kristalle vom Schmelzpunkt 136-138°C.

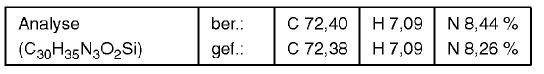

Beispiel 11: Eine Suspension von 15 g 2-(2,4-Dihydroxyphenyl)-4,6-di(2,4-dimethylphenyl)-1,3,5-triazin, 5,55 g Chloromethyltrimethylsilan und 9,7 g Kaliumcarbonat in 100 ml N,N-Dimethylacetamid wird unter Rühren für 24 h auf 100°C erwärmt. Anschließend wird das abgekühlte Gemisch abfiltriert und das Filtrat eingeengt. Der Rückstand wird mit Dichlormethan aufgenommen und mit Wasser und anschließend mit einer gesättigten Natriumchloridlösung gewaschen. Der nach Trocknen mit MgS0₄, Abfiltrieren und Eindampfen erhaltene Rückstand wird aus Hexan umkristallisiert. Man erhält 6,7 g der Verbindung der Formel 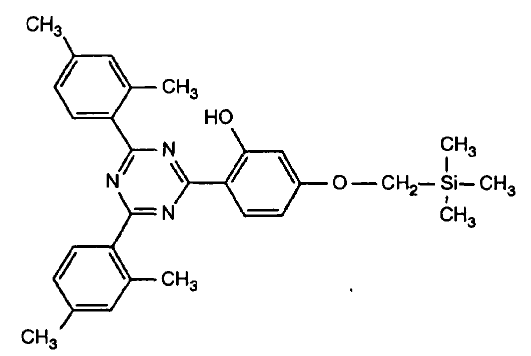 als hellgelbe Kristalle vom Schmelzpunkt 167-170°C.

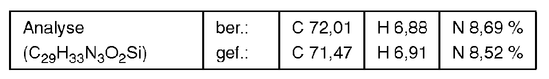

Beispiel 12: Beispiel 11 wird wiederholt, wobei jedoch als Ausgangsprodukt 2-(2,4-Dihydroxyphenyl)-4,6-diphenyl-1,3,5-triazin verwendet wird. Man erhält die Verbindung der Formel 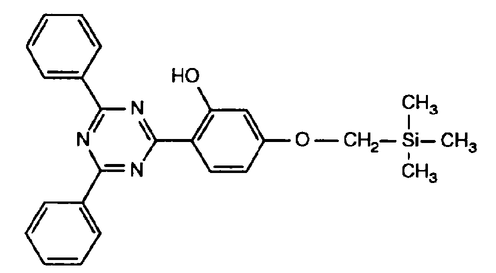 als hellgelbe Kristalle vom Schmelzpunkt 170-172°C.

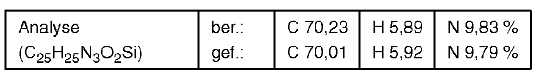

Anwendunqsheispiele

Beispiel 13: Mit einem weissen Coil-Coat-Lack grundierte Aluminiumbleche werden mit einem Silbermetallic-Basislack auf Basis Polyester/Celluloseacetobutyrat/Melamin lackiert. Auf diesen Basislack wird ein Klarlack der folgenden Zusammensetzung appliziert:

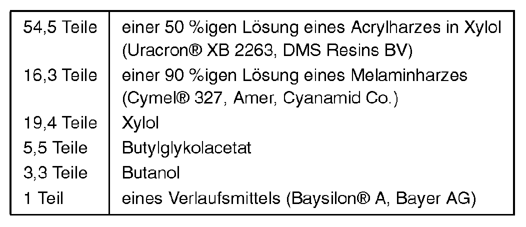

Diesem Klarlack werden die in den Tabellen 1 - 3 angegebenen Stabilisatoren in Form einer 10%igen Xylollösung zugemischt Die Zusatzmenge entspricht 2 % Stabilisator bezogen auf den Festkörper des Klarlackes.

Nach 25 Minuten Lagerung bei Raumtemperatur werden die Proben 30 Minuten auf 130°C erwärmt. Der so gehärtete Lack hat eine Dicke von ca. 45 µm.

Die Proben werden in einem UVCON®-Gerät der Fa. Atlas (UVB-313-Lampen) mit einem Zyklus von 8 h UV-Bestrahlung bei 70°C und 4 h Kondensation bei 50°C bewittert.

In n regelmäßigen Abständen wird der 20°-Glanz der Proben nach DIN 67530 gemessen; der Anfangswert (20°-Glanz vor Beginn der Bewitterung) wird auf 100 % festgesetzt. Die Tabellen 1, 2 und 3 zeigen die Ergebnisse der Glanzmessungen nach der angegebenen Bewitterungsdauer.

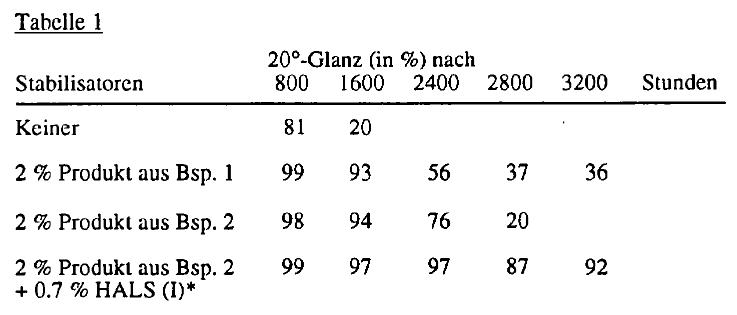

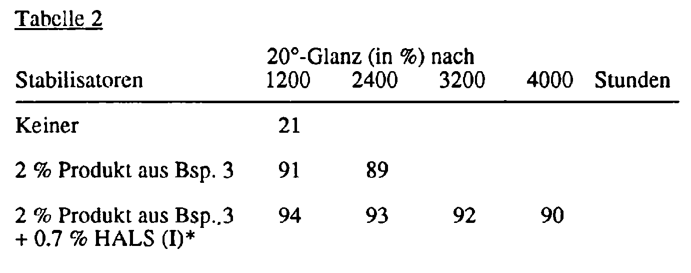

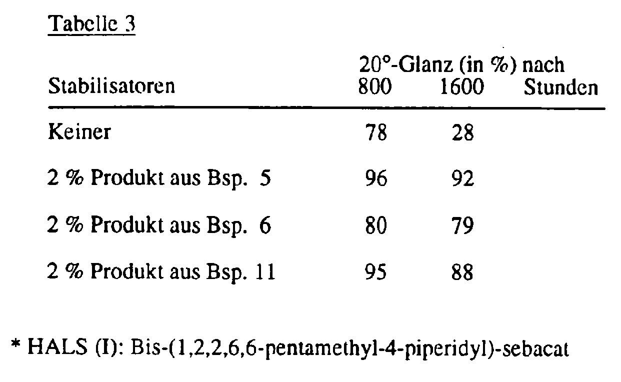

## Patentansprüche (Patentansprüche für folgende(n) Vertragsstaat(en) : BE, DE, FR, GB, IT, NL, SE)

1. Eine Verbindung der Formel la oder der Formel lb 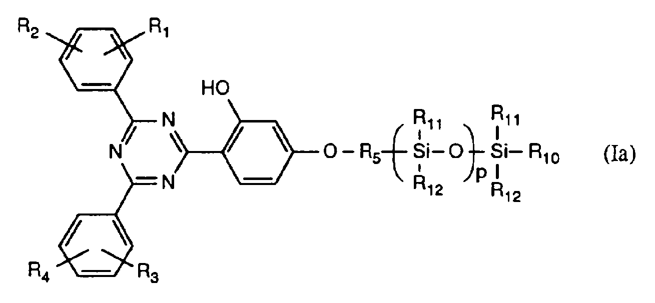 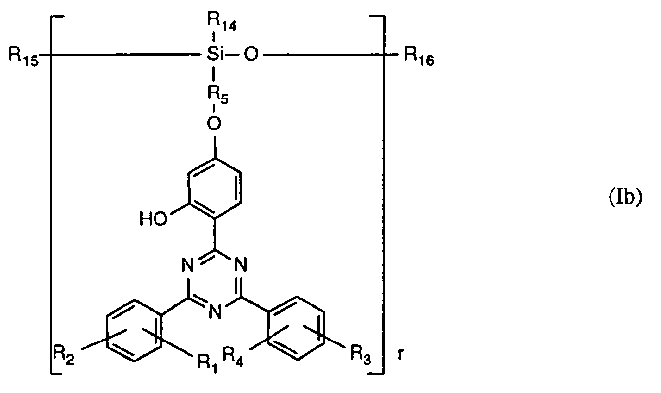 worin p 0 oder eine Zahl von 1-50 ist, r eine Zahl von 1-50 ist,
R₁ und R₃ unabhängig voneinander Wasserstoff, OH, C₁-Cᵢ₂-Alkyl oder Cyclohexyl bedeuten,
R₂ und R₄ unabhängig voneinander Wasserstoff, OH, C₁-C₁₂-Alkyl, C₁-C₁₈-Alkoxy, Halogen oder eine Gruppe -O-ll bedeuten, 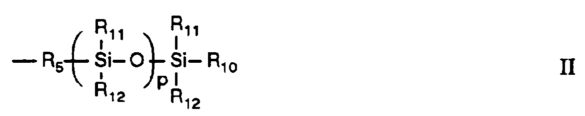
R₅ eine direkte Bindung oder eine zweiwertige Gruppe einer der folgenden Formeln ist:
-CₘH₂ₘ-, -(CH₂)ₘ-O-, -(CH2)ₘ-O-R₆-, -(CH₂)ₘ-CO-X-(CH₂)ₙ-, -(CH₂)ₘ-CO-X-(CH₂)ₙ-O- 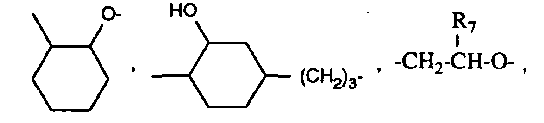 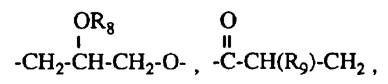
-CH₂-CH(OH)-CH₂-Y-(CH₂)ₘ-,
worin m und n unabhängig voneinander 1-4 sind,
R₆ C₁-C₁₂-Alkylen; Cyclohexylen oder Phenylen bedeutet,
R₇ C₁-C₁₂-Alkyl, C₅-C₈-Cycloalkyl; Phenyl, C₂-C₁₃-Alkoxymethyl, C₆-C₉-Cycloalkoxymethyl oder Phenoxymethyl bedeutet,
R₈ eine Gruppe der Formel ll bedeutet,
Rg Wasserstoff oder Methyl ist,
X -O- oder -NR₁₃- bedeutet, worin R₁₃ Wasserstoff, Phenyl, C₁-C₁₂-Alkyl, Phenyl oder eine Gruppe -(CH₂)₃-ll oder -(CH₂)₃-O-ll bedeutet,
Y -O- oder -NH- bedeutet,
R₁₀, R₁₁ und R₁₂ unabhängig voneinander C₁-C₁₈-Alkyl, Cyclohexyl, Phenyl oder C₁-C₁₈-Alkoxy bedeuten und im Fall, daß R₂ und R₄ nicht eine Gruppe -O-ll sind, R₁₀ und/oder R₁₁ auch eine Gruppe der Formel lll 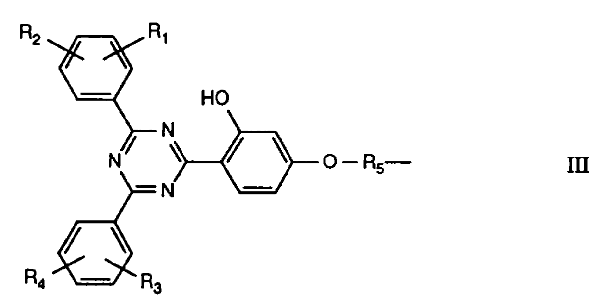 sein können,
R₁₄ C₁-C₁₂-Alkyl, C₅-C₈-Cycloalkyl oder Phenyl bedeutet,
R₁₅ Hydroxy oder C₁-C₄-Alkoxy und R₁₆ Wasserstoff oder C₁-C₄-Alkyl bedeuten, oder,
im Fall daß r größer als 2 ist, R₁₅ und R₁₆ zusammen die Bedeutung einer direkten Bindung haben können.

2. Eine Verbindung gemäß Anspruch 1 der Formel la, worin R₅ eine direkte Bindung oder eine zweiwertige Gruppe einer der folgenden Formeln ist: -(CH₂)ₘ-_{;} -(CH₂)ₘ-O-, -(CH₂)ₘ-O-R₆-, -(CH₂)ₘ-CO-X-(CH₂)ₙ-, -(CH₂)ₘ-CO-X-(CH₂)ₙ-O-, 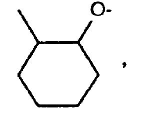 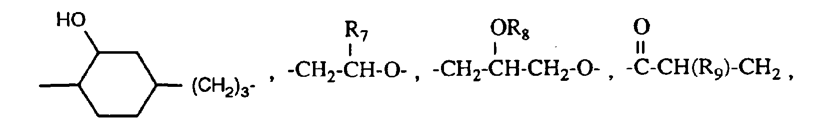 -CH₂-CH(OH)-CH₂-Y-(CH₂)m-, worin m und n unabhängig voneinander 1-4 sind.

3. Eine Verbindung gemäß Anspruch 1 der Formel la oder der Formel lb, worin R₁, R₂, R₃ und R₄ unabhängig voneinander Wasserstoff oder Methyl bedeuten.

4. Eine Verbindung gemäß Anspruch 1 der Formel la oder der Formel lb, worin R₁₀, R₁₁ und R₁₂ unabhängig voneinander C₁-C₈-Alkyl, Phenyl oder C₁-C₈-Alkoxy und R₁₄ C₁-C₈-Alkyl oder Phenyl bedeuten und im Fall, daß R₂ und R₄ nicht eine Gruppe der Formel ll sind, R₁₀ und/oder R₁₁ auch eine Gruppe der Formel lll sein können.

5. Eine Verbindung gemäß Anspruch 4 der Formel la oder der Formel lb, worin R₁₀, R» und R₁₂ unabhängig voneinander C₁-C₄-Alkyl oder C₁-C₄-Alkoxy und R₁₄ C₁-C₄-Alkyl bedeuten.

6. Eine Verbindung gemäß Anspruch 1 der Formel la oder der Formel lb, worin R₅ eine der Gruppen -CₘH₂ₘ-, - (CH₂)ₘ-O-, (CH₂)ₘ-CO-X-(CH₂)ₙ- 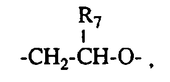 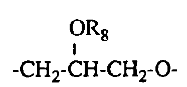 oder -CH₂-CH(OH)-CH₂-Y-(CH₂)ₘ- bedeutet, worin m 1, 2 oder 3 ist, R₇ Methyl, Phenyl, C₃-Cg-Alkoxymethyl oder Phenoxymethyl bedeutet, R₈ eine Gruppe der Formel ll ist und X und Y jeweils Sauerstoff bedeuten.

7. Eine Verbindung gemäß Anspruch 6 der Formel la oder der Formel lb, worin R₅ eine der Gruppen -CₘH₂ₘ-, - (CH₂)₂-O-, -CH₂-CO-O-CH₂-, -CH₂-CH(0-C₄Hg)-0-, 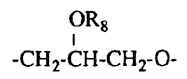 oder -CH₂-CH(OH)-CH₂-O-(CH₂)₃- bedeutet, m eine der Zahlen 1, 2 oder 3 und R₈ tert.-Butyl-dimethyl-silyl ist

8. Eine Verbindung gemäß Anspruch 1 der Formel la, worin p null ist.

9. Eine Verbindung gemäß Anspruch 3 der Formel la oder der Formel lb, worin R1, R₂, R₃ und R₄ jeweils in o- und/oder p-Stellung stehen, p die Zahl null, R₅ -(CH₂)₃-, R₁₀ Methyl oder Ethyl, R₁ und R₁₂ Ethyl oder Ethoxy, R₁₄ Methyl, R₁₅ -OH, Methoxy oder Ethoxy, R₁₆ Wasserstoff, Methyl oder Ethyl bedeutet, und, im Fall daß r größer als 2 ist, R₁₅ und R₁₆ zusammen die Bedeutung einer direkten Bindung haben können.

10. Gemisch oligomerer Verbindungen, erhältlich durch Hydrolyse und Kondensation von Verbindungen der Formel la gemäß Anspruch 1, worin p null ist und R₁₀, R₁₁ und R₁₂ C₁-C₁₈-Alkoxy bedeuten.

11. Verwendung von Verbindungen der Formel la oder der Formel lb gemäß Anspruch 1 als Stabilisatoren für organische Polymere gegen deren Schädigung durch Licht, Sauerstoff und Wärme.

12. Verwendung gemäß Anspruch 11 in Lacken.

13. Stabilisiertes organisches Polymer, enthaltend als Stabilisator gegen Licht, Sauerstoff und Wärme mindestens eine Verbindung der Formel la und/oder der Formel lb gemäß Anspruch 1.

14. Stabilisiertes Polymer gemäß Anspruch 13, dadurch gekennzeichnet, daß das Polymer ein Bindemittel für einen Lack ist.

15. Stabilisiertes Polymer gemäß Anspruch 13, dadurch gekennzeichnet, daß das Polymer außerdem einen oder mehrere andere Stabilisatoren und/oder sonstige Zusatzstoffe enthält.

16. Stabilisiertes Polymer gemäß Anspruch 15, dadurch gekennzeichnet, daß das Polymer außerdem ein Lichtschutzmittel aus der Klasse der sterisch gehinderten Amine oder/und der Klasse der 2-(2'-Hydroxyphenyl)-benztriazole enthält.

## Patentansprüche (Patentansprüche für folgende(n) Vertragsstaat(en) : ES)

1. Zusammensetzung enthaltend
(a) ein organisches Polymer und
(b) mindestens eine Verbindung der Formel la oder der Formellb 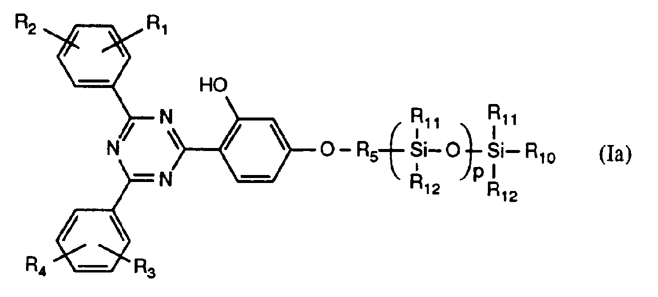 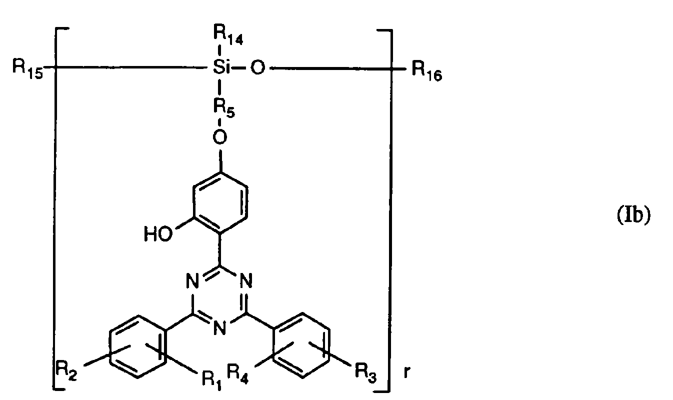
worin p 0 oder eine Zahl von 1-50 ist, r eine Zahl von 1-50 ist,
R₁ und R₃ unabhängig voneinander Wasserstoff, OH, C₁-C₁₂-Alkyl oder Cyclohexyl bedeuten,
R₂ und R₄ unabhängig voneinander Wasserstoff, OH, C₁-C₁₂-Alkyl, C₁-C₁₈-Alkoxy, Halogen oder eine Gruppe -O-ll bedeuten, 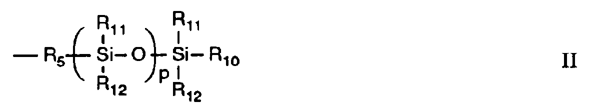
R₅ eine direkte Bindung oder eine zweiwertige Gruppe einer der folgenden Formeln ist: -CₘH₂ₘ-, -(CH₂)ₘ-O-, -(CH₂)ₘ-O-R₆-, -(CH₂)ₘ-CO-X-(CH₂)ₙ-, -(CH₂)ₘ-CO-X-(CH₂)ₙ-O-, 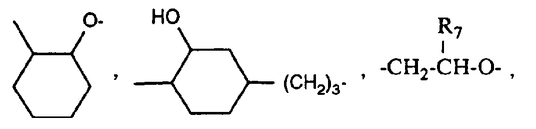 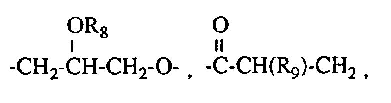
-CH₂-CH(OH)-CH₂-Y-(CH₂)ₘ-,
worin m und n unabhängig voneinander 1-4 sind,
R₆ C₁-Cᵢ₂-Alkylen, Cyclohexylen oder Phenylen bedeutet,
R₇ C₁-C₁₂-Alkyl, C₅-C₈-Cycloalkyl, Phenyl, C₂-C₁₃-Alkoxymethyl, C₆-C₉-Cycloalkoxy-methyl oder Phenoxymethyl bedeutet,
R₈ eine Gruppe der Formel ll bedeutet,
Rg Wasserstoff oder Methyl ist,
X-O-oder-NR₁₃-bedeutet, worin R₁₃ Wasserstoff, C₁-C₁₂-Alkyl oder eine Gruppe-(CH₂)₃-ll oder-(CH₂)₃-O-ll bedeutet,
Y -O- oder -NH- bedeutet,
R₁₀, R₁₁ und R₁₂ unabhängig voneinander C₁-C₁₈-Alkyl, Cyclohexyl, Phenyl oder C₁-C₁₈-Alkoxy bedeuten und im Fall, daß R₂ und R₄ nicht eine Gruppe -O-ll sind, R₁₀ und/oder R₁₁ auch eine Gruppe der Formel lll 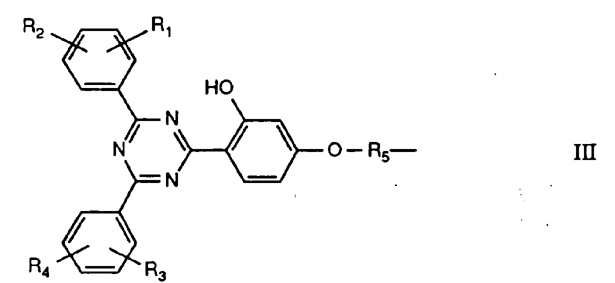 sein können,
R₁₄ C₁-C₁₂-Alkyl, C₅-C₈-Cycloalkyl oder Phenyl bedeutet,
R₁₅ Hydroxy oder C₁-C₄-Alkoxy und R₁₆ Wasserstoff oder C₁-C₄-Alkyl bedeuten, oder,
im Fall daß r größer als 2 ist, R₁₅ und R₁₆ zusammen die Bedeutung einer direkten Bindung haben können.

2. Zusammensetzung gemäß Anspruch 1 enthaltend eine Verbindung der Formel la, worin R₅ eine direkte Bindung oder eine zweiwertige Gruppe einer der folgenden Formeln ist:
-(CH₂)ₘ-, -(CH₂)ₘ-O-, -(CH₂)ₘ-O-R₆-, -(CH₂)ₘ-CO-X-(CH₂)ₙ-, -(CH₂)ₘ-CO-X-(CH₂)ₙ-O-, 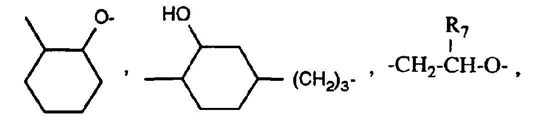 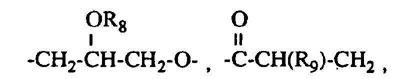
-CH₂-CH(OH)-CH₂-Y-(CH₂)ₘ-, worin m und n unabhängig voneinander 1-4 sind.

3. Zusammensetzung gemäß Anspruch 1 enthaltend eine Verbindung der Formel la oder der Formel lb, worin R₁, R₂, R₃ und R₄ unabhängig voneinander Wasserstoff oder Methyl bedeuten.

4. Zusammensetzung gemäß Anspruch 1 enthaltend eine Verbindung der Formel la oder der Formel lb, worin R₁₀, R₁₁ und R₁₂ unabhängig voneinander C₁-C₈-Alkyl, Phenyl oder C₁-C₈-Alkoxy und R₁₄ C₁-C₈-Alkyl oder Phenyl bedeuten und im Fall, daß R₂ und R₄ nicht eine Gruppe der Formel ll sind, R₁₀ und/oder R₁ auch eine Gruppe der Formel lll sein können.

5. Zusammensetzung gemäß Anspruch 4 enthaltend eine Verbindung der Formel la oder der Formel lb, worin R₁₀, R₁₁ und R₁₂ unabhängig voneinander C₁-C₄-Alkyl oder C₁-C₄-Alkoxy und R₁₄ C₁-C₄-Alkyl bedeuten

6. Zusammensetzung gemäß Anspruch 1 enthaltend eine Verbindung der Formel la oder der Formel lb, worin Rₛ eine der Gruppen -CₘH₂ₘ-, -(CH₂)ₘ-O-, -(CH₂)ₘ-CO-X-(CH₂)ₙ-, 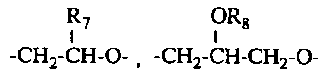 oder -CH₂-CH(OH)-CH₂-Y-(CH₂)ₘ- bedeutet, worin m 1, 2 oder 3 ist, R₇ Methyl, Phenyl, C₃-Cg-Alkoxymethyl oder Phenoxymethyl bedeutet, R₈ eine Gruppe der Formel ll ist und X und Y jeweils Sauerstoff bedeuten.

7. Zusammensetzung gemäß Anspruch 6 enthaltend eine Verbindung der Formel la oder der Formel lb, worin R₅ eine der Gruppen -CₘH₂ₘ-, -(CH₂)₂-O-, -CH₂-CO-O-CH₂-, -CH₂-CH(O-C₄Hg)-O-, 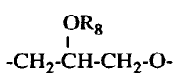 oder -CH₂-CH(OH)-CH₂-O-(CH₂)₃- bedeutet, m eine der Zahlen 1, 2 oder 3 und R₈ tert.-Butyl-dimethyl-silyl ist.

8. Zusammensetzung gemäß Anspruch 1 enthaltend eine Verbindung der Formel la, worin p null ist

9. Zusammensetzung gemäß Anspruch 3 enthaltend eine Verbindung der Formel la oder der Formel lb, worin R₁, R₂, R₃ und R₄ jeweils in o- und/oder p-Stellung stehen, p die Zahl null, Rₛ -(CH₂)₃-, R₁ Methyl oder Ethyl, R₁₁ und R₁₂ Ethyl oder Ethoxy, R₁₄ Methyl, R₁₅ -OH, Methoxy oder Elhoxy, R₁₆ Wasserstoff, Methyl oder Ethyl bedeutet, und, im Fall daß r größer als 2 ist, R₁₅ und R₁₆ zusammen die Bedeutung einer direkten Bindung haben können.

10. Zusammensetzung gemäß Anspruch 1 enthaltend neben den Komponenten (a) und (b) einen oder mehrere andere Stabilisatoren und/oder sonstige Zusatzstoffe.

11. Zusammensetzung gemäß Anspruch 11, dadurch gekennzeichnet, daß sie als anderen Stabilisator und/oder sonstigen Zusatzstoff ein Lichtschutzmittel aus der Klasse der sterisch gehinderten Amine oder/und der Klasse der 2-(2'-Hydroxyphenyl)-benztriazole enthält.

12. Zusammensetzung gemäß Anspruch 1, worin die Komponente (b) ein Gemisch oligomerer Verbindungen ist, erhältlich durch Hydrolyse und Kondensation von Verbindungen der Formel la gemäß Anspruch 1, worin p null ist und R₁₀, R₁₁ und R₁₂ C₁-C₁₈-Alkoxy bedeuten.

13. Verfahren zum Stabilisieren organischer Polymere gegen Schädigung durch Licht, Sauerstoff und Wärme, dadurch gekennzeichnet, daß man diesen Materialien mindestens eine Verbindung der Formel la und/oder der Formel lb gemäß Anspruch 1 beimischt.

14. Verfahren gemäß Anspruch 13, worin das organische Polymer ein Bindemittel für einen Lack ist.

15. Verfahren zur Herstellung der in Anspruch 1 definierten Verbindungen der Formel la, dadurch gekennzeichnet, daß,
(1) wenn R₅ eine Gruppe -CₘH₂ₘ- ist, nach der Reaktionsgleichung 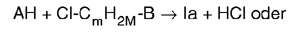 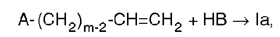
(2) wenn R₅ eine Gruppe -(CH₂)ₘ-O- ist, nach der Reaktionsgleichung 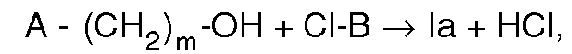
(3) wenn Rₛ eine Gruppe -(CH₂)ₘ-O-R₆- ist, nach der Reaktionsgleichung 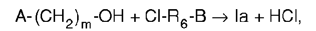
(4) wenn R₅ eine Gruppe -(CH₂)ₘ-CO-X-(CH₂)ₙ- ist, nach der Reaktionsgleichung 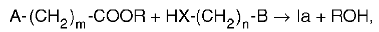
(5) wenn R₅ eine Gruppe -(CH₂)ₘ-CO-X-(CH₂)_{"}-O- ist, nach der Reaktionsgleichung 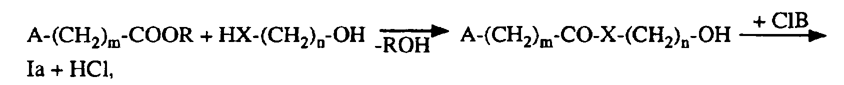
(6) wenn R₅ eine Gruppe 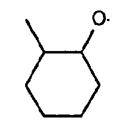
ist, nach der Reaktionsgleichung 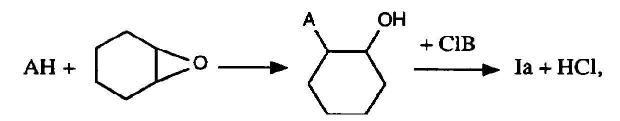
(7) wenn R₅ eine Gruppe -CH₂-CH(R₇)-O- ist, nach der Reaktionsgleichung 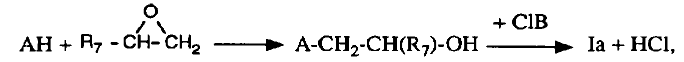
(8) wenn R₅ eine Gruppe -CH₂-CH(OR₈)-CH₂O- ist, nach der Reaktionsgleichung 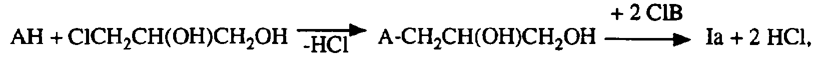
(9) wenn R₅ eine Gruppe 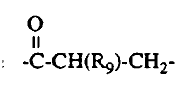 ist, nach der Reaktionsgleichung 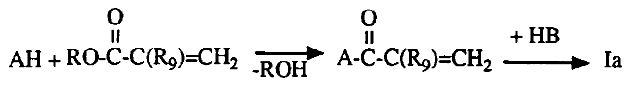 oder alternativ gemäß 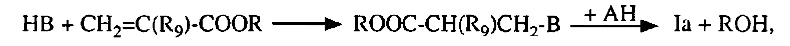 und (10), wenn R₅ eine Gruppe -CH₂-CH(OH)-CH₂-Y-(CH₂)ₙ- ist, nach der Reaktionsgleichung 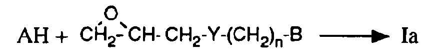 verfahren wird, wobei A eine Triazingruppe der Formel 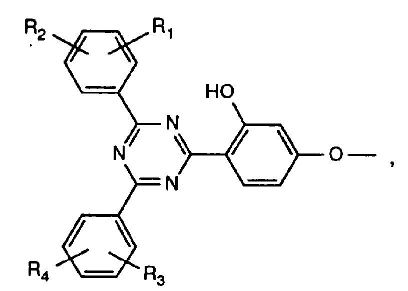 Beine Silylgruppe der Formel 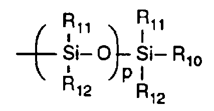 ist, R C₁-C₂-Alkyl bedeutet, und p, R₁ bis R₁₂, X und Y die in Anspruch 1 angegebenen Bedeutungen haben.

16. Verfahren zur Herstellung von in Anspruch 1 definierten Verbindungen der Formel lb, worin r größer als 1 ist, dadurch gekennzeichnet, daß Dialkoxy- oder Dichlorsilane der Formel IV 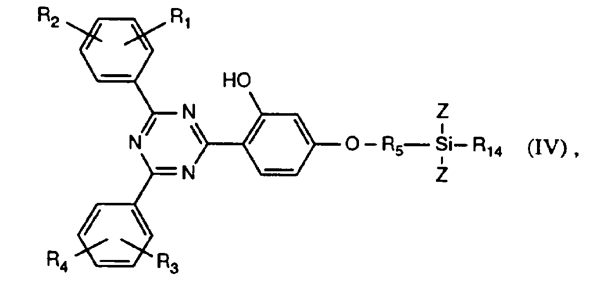 worin Z für C₁-C₄-Alkoxy oder ein Chloratom steht und R₁, R₂, R₃, R₄, R₅ und R₁₄ die in Anspruch 1 angegebenen Bedeutungen haben, der Hydrolyse und anschließenden Kondensation unterworfen werden.

## Claims (Claims for the following Contracting State(s) : BE, DE, FR, GB, IT, NL, SE)

1. A compound of the formula la or lb 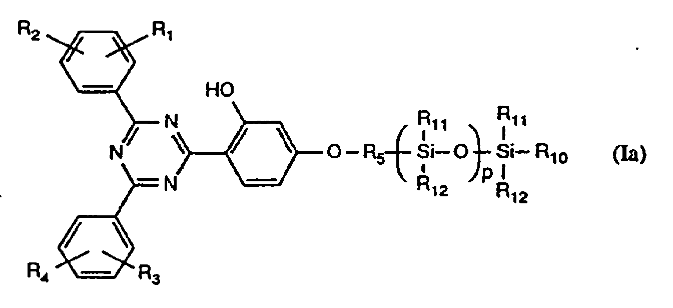 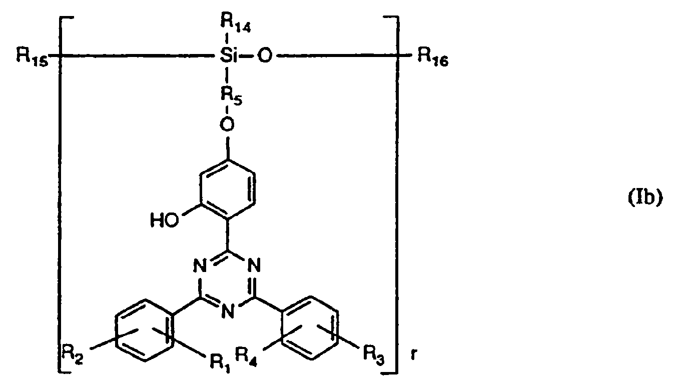 wherein p is 0 or a number from 1-50, r is a number from 1-50, R₁ and R₃ are each independently of the other hydrogen, OH, C₁-C₁₂-alkyl or cyclohexyl, R₂ and R₄ are each independently of the other hydrogen, OH, C₁-C₁₂alkyl, C₁-C₁₈alkoxy, halogen or a group -O-ll, 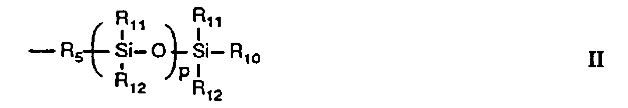 R₅ is a direct bond or a divalent group of one of the following formulae: -CₘH₂ₘ-, -(CH₂)ₘ-O-, -(CH₂)ₘ-O-R₆-, - (CH₂)m-CO-X-(CH₂)ₙ, -(CH₂)ₘ-CO-X-(CH₂)ₙ-O-, -(CH₂)ₘ-CO-X-(CH₂)ₙ-O-, 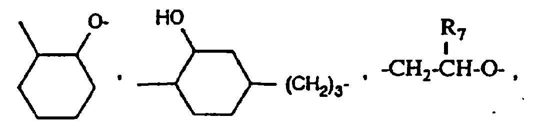 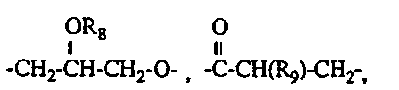 -CH₂-CH(OH)-CH₂-Y-(CH₂)ₘ-,
wherein m and n are each independently of the other 1-4,
R₆ is C₁-C₁₂alkylene, cyclohexylene or phenylene,
R₇ is C₁-C₁₂alkyl, C₅-C₈cycloalkyl, phenyl, C₂-C₁₃alkoxymethyl,
C₆-C₉cycloalkoxymethyl or phenoxymethyl,
R₈ is a group of formula ll,
Rg is hydrogen or methyl,
X is -0- or -N₁₃- wherein R₁₃ is hydrogen, C₁-C₁₂alkyl, phenyl or a group -(CH₂)₃-ll or -(CH₂)₃-O-ll, Y is -0- or -NH-,
R₁₀, R₁₁ and R₁₂ are each independently of one another C₁-C₁₈alkyl,
cyclohexyl, phenyl or C₁-C₁₈alkoxy, and, if R₂ and R₄ are not a group -O-ll, R₁ and/or R₁₁ may also be a group of formula III 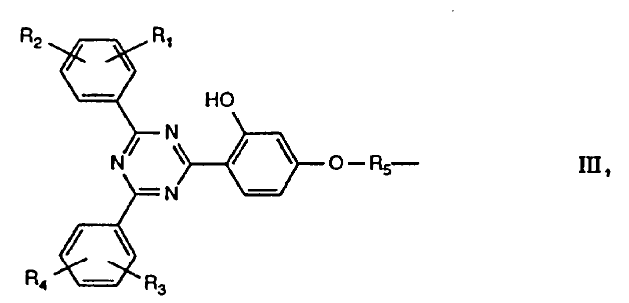
R₁₄ is C₁-C₁₂alkyl, C₅-C₈cycloalkyl or phenyl, and
R₁₅ is hydroxy or Cₗ-C₄alkoxy and R₁₆ is hydrogen or Cₗ-C₄alkyl or, if r is greater than 2, R₁₅ and R₁₆ together may be a direct bond.

2. A compound according to claim 1 of formula la, wherein R₅ is a direct bond or a divalent group of one of the following formulae: -(CH₂)ₘ-, -(CH₂)ₘ-O-, -(CH₂)ₘ-O-R₆-, -(CH₂)ₘ-CO-X-(CH₂)ₙ-, -(CH₂)ₘ-CO-X-(CH₂)ₙ-O-, -(CH₂)ₘ-O-R₆-, -(CH₂)ₘ-CO-X-(CH₂)ₙ-, -(CH₂)m-CO-X-(CH₂)ₙ-O-, 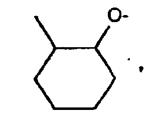 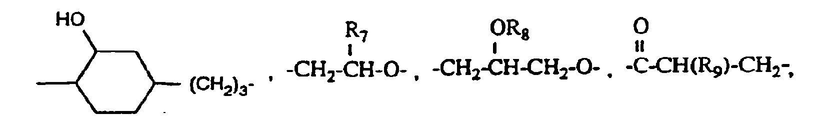 -CH₂-CH(OH)-CH₂-Y-(CH₂)ₘ-, wherein m and n are each independently of the other 1-4.

3. A compound according to claim 1 of formula la or lb, wherein R₁, R₂, R₃ and R₄ are each independently of one another hydrogen or methyl.

4. A compound according to claim 1 of formula la or lb, wherein R₁₀, R₁₁ and R₁₂ are each independently of one another C₁-C₈alkyl, phenyl or C₁-C₈alkoxy, and R₁₄ is C₁-C₈alkyl or phenyl and, if R₂ and R₄ are not a group of formula ll, R₁₀ and/or R₁₁ may also be a group of formula lll.

5. A compound according to claim 4 of formula la or lb, wherein R₁₀, R₁₁ and R₁₂ are each independently of one another C₁-C₄alkyl or C₁-C₄alkoxy and R₁₄ is C₁-C₄alkyl.

6. A compound according to claim 1 of formula la or lb, wherein R₅ is a group -CₘH₂ₘ-, -(CH₂)ₘ-O-, -(CH₂)ₘ-CO-X-(CH₂)ₙ-, 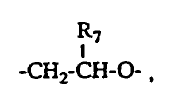 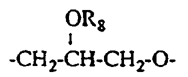 or-(CH₂-CH(OH)-CH₂-Y-(CH₂)ₘ-, wherein m is 1, 2 or 3, R₇ is methyl, phenyl, C₃-C₈alkoxymethyl or phenoxymethyl, R₈ is a group of formula ll and X and Y are each oxygen.

7. A compound according to claim 6 of formula la or Ib, wherein R₅ is a group -CₘH₂ₘ-, -(CH₂)₂-O-, -CH₂-CO-O-CH₂-, -CH₂-CH(O-C₄H₉)-O-, 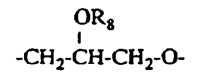 or -CH₂-CH(OH)-CH₂-O-(CH₂)₃-_{;} m is a number 1, 2 or 3, and R₈ is tert-butyldimethylsilyl.

8. A compound according to claim 1 of formula la, wherein p is zero.

9. A compound according to claim 3 of formula la or lb, wherein R₁, R₂, R₃ and R₄ are each in o- and/or p-position, p is zero, R₅ is -(CH₂)₃-; R₁₀ is methyl or ethyl, R₁₁ and R₁₂ are ethyl or ethoxy, R₁₄ is methyl, R₁₅ is -OH, methoxy or ethoxy, R₁₆ is hydrogen, methyl or ethyl, and, if r is greater than 2, R₁₅ and R₁₆ together may be a direct bond.

10. A mixture of oligomeric compounds obtainable by hydrolysis and condensation of a compound of formula la according to claim 1 wherein p is zero and R₁₀; R₁₁ and R₁₂ are C₁-C₁₈alkoxy.

11. The use of a compound of formula la or lb according to claim 1 as a stabiliser for organic polymers against degradation thereof caused by light, oxygen and heat.

12. The use according to claim 11 for a surface-coating material.

13. A stabilised organic polymer comprising at least one compound of formula la and/or lb according to claim 1 as stabiliser to light, oxygen and heat.

14. A stabilised polymer according to claim 13, which is a binder for a surface-coating material

15. A stabilised polymer according to claim 13, which additionally contains one or more other stabilisers and/or other additives.

16. A stabilised polymer according to claim 15, which additionally contains a light stabiliser from the class of the sterically hindered amines and/or from the class of the 2-(2'-hydroxyphenyl)benzotriazoles.

## Claims (Claims for the following Contracting State(s) : ES)

1. A composition comprising
(a) an organic polymer and
(b) at least one compound of formula la or lb 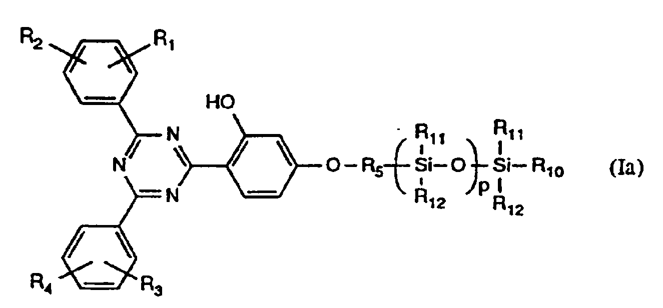 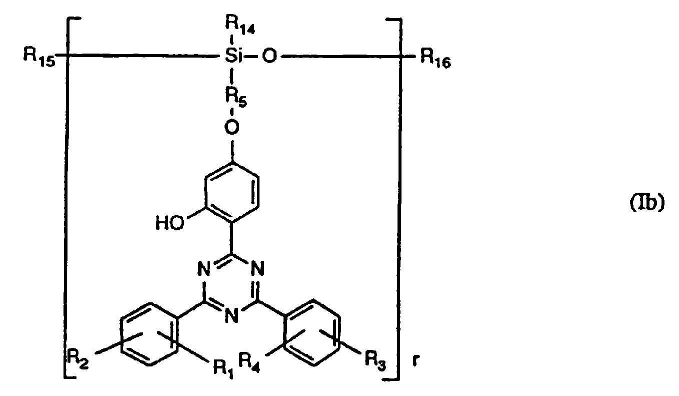
wherein p is 0 or a number from 1-50, r is a number from 1-50,
R₁ and R₃ are each independently of the other hydrogen, OH, C₁-C₁₂alkyl or cyclohexyl,
R₂ and R₄ are each independently of the other hydrogen, OH, C₁-C₁₂alkyl, C₁-C₁₈alkoxy, halogen or a group -O-ll, 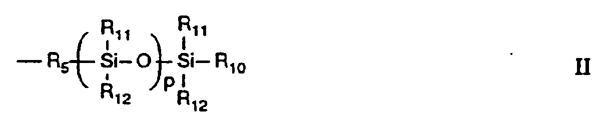
R₅ is a direct bond or a divalent group of one of the following formulae: -CₘH₂ₘ-, -(CH₂)ₘ-O-, -(CH₂)ₘ-O-R₆, -(CH₂)ₘ-CO-X-(CH₂)ₙ, -(CH₂)ₘ-CO-X-(CH₂)ₙ-O-, -(CH₂)ₘ-CO-X-(CH₂)ₙ-O-, 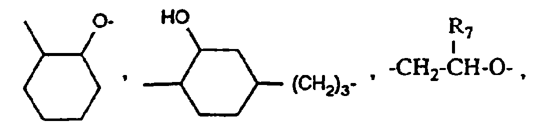 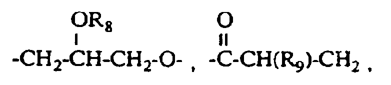
-CH₂-CH(OH)-CH₂-Y-(CH₂)ₘ-,
wherein m and n are each independently of the other 1-4,
R₅ is C₁-C₁₂alkylene, cyclohexylene or phenylene,
R₇ is C₁-C₁₂alkyl, C₅-C₈-cycloalkyl, phenyl, C₂-C₁₃alkoxymethyl,
C₆-C₉cycloalkoxymethyl or phenoxymethyl,
R₈ is a group of formula ll,
Rg is hydrogen or methyl
X is -O- or -N₁₃-, wherein R₁₃ is hydrogen, C₁-C₁₂alkyl or a group -(CH₂)₃-ll or -(CH₂)₃-FH-ll, Y is -0- or -NH-,
R₁₀, R₁₁ and R₁₂ are each independently of one another C₁-C₁₈alkyl,
cyclohexyl, phenyl or C₁-C₁₈alkoxy, and, if R₂ and R₄ are not a group -O-ll, R₁₀ and/or R₁₁ may also be a group of formula III 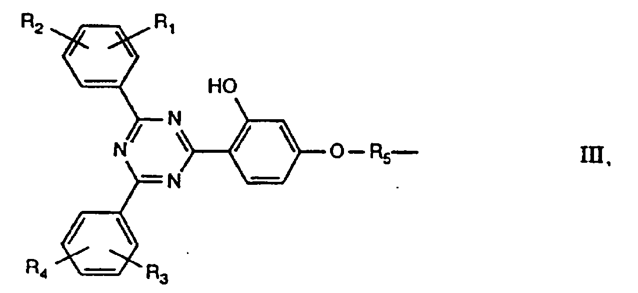
R₁, is C₁-C₁₂alkyl, C₅-C₈cycloalkyl or phenyl, and
R₁₅ is hydroxy or Cₗ-C₄alkoxy and R₁₆ is hydrogen or Cₗ-C₄alkyl or, if r is greater than 2, R₁₅ and R₁₆ together may be a direct bond.

2. A composition according to claim 1 comprising a compound of formula la, wherein R₅ is a direct bond or a divalent group of one of the following formulae: -(CH₂)ₘ-, -(CH₂)ₘ-O-, -(CH₂)ₘ-O-R₆-, -(CH₂)ₘ-CO-X-(CH₂)ₘ-, - (CH₂)ₘ-CO-X-(CH₂)ₙ-O-, -(CH₂)ₘ-CO-X-(CH₂)ₙ-O-, 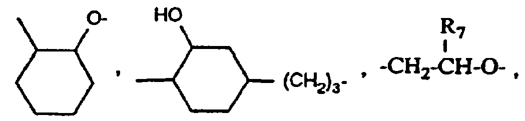 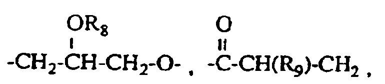 -CH₂-CH(OH)-CH₂-Y-(CH₂)ₘ-, wherein m and n are each independently of the other 1-4.

3. A composition according to claim 1 comprising a compound of formula la or Ib, wherein R₁, R₂, R₃ and R₄ are each independently of one another hydrogen or methyl.

4. A composition according to claim 1 comprising a compound of formula la or lb, wherein R₁₀, R₁₁ and R₁₂ are each independently of one another C₁-C₈alkyl, phenyl or C₁-C₈alkoxy, and R₁₄ is C₁-C₈alkyl or phenyl and, if R₂ and R₄ are not a group of formula ll, R₁₀ and/or R₁₁ may also be a group of formula lll.

5. A composition according to claim 4 comprising a compound of formula la or lb, wherein R₁₀, R₁₁ and R₁₂ are each independently of one another C₁-C₄alkyl, or C₁-C₄alkoxy and R₁₄ is C₁-C₄alkyl.

6. A composition according to claim 1 comprising a compound of formula la or lb, wherein R₅ is a group -CₘH₂ₘ-, - (CH₂)ₘ-O-, -(CH₂)ₘ-CO-X-(CH₂)ₙ-, 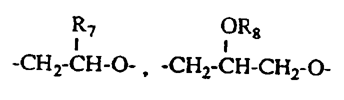 or -(CH₂-CH(OH)-CH₂-Y-(CH₂)ₘ-, wherein m is 1,2 or 3, R₇ is methyl, phenyl, C₃-Cgalkoxymethyl or phenoxymethyl, R₈ is a group of formula ll and X and Y are each oxygen.

7. A composition according to claim 6 comprising a compound of formula la or lb, wherein R₅ is a group -CₘH₂ₘ-, - (CH₂)₂-O-, -CH₂-CO-O-CH₂-, -CH₂-CH(O-C₄H₉)-O, 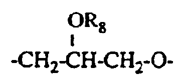 or -CH₂-CH(OH)-CH₂-O-(CH₂)₃-; m is a number 1, 2 or 3, and R₈ is tert-butyldimethylsilyl.

8. A composition according to claim 1 comprising a compound of formula la, wherein p is zero.

9. A composition according to claim 3 comprising a compound of formula la or lb, wherein R₁, R₂, R₃ and R₄, are each in o- and/or p-position, p is zero, R₅ is -(CH₂)₃-, R₁₀ is methyl or ethyl, R₁₁ and R₁₂ are ethyl or ethoxy, R₁₄, is methyl, R₁₅ is -OH, methoxy or ethoxy, R₁₆ is hydrogen, methyl or ethyl, and, if r is greater than 2, R₁₅ and R₁₆ together may be a direct bond.

10. A composition according to claim 1, comprising in addition to components (a) and (b) one or more other stabilisers and/or other additives.

11. A composition according to claim 11, which comprises as other stabiliser and/or other additive a light stabiliser from the class of the sterically hindered amines and/or from the class of the 2-(2'-hydroxyphenyl)benzotriazoles.

12. A composition according to claim 1, wherein component (b) is a mixture of oligomeric compounds obtainable by hydrolysis and condensation of a compound of formula la according to claim 1, wherein p is zero and R₁₀, R₁₁ and R₁₂ are C₁-C₁₈alkoxy.

13. A method of stabilising organic polymers against degradation caused by light, oxygen and heat, which comprises incorporating in said materials at least one compound of formula la and/or lb according to claim 1.

14. A method according to claim 13, wherein the organic polymer is a binder for a surface-coating material.

15. A process for the preparation of a compound of formula la defined in claim 1, which comprises following a procedure which is
(1) if R₅ is a group -CₘH₂ₘ-, in accordance with equation 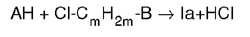 or 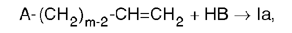
(2) if R₅ is a group -(CH₂)ₘ-O-, in accordance with equation 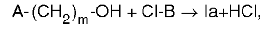
(3) if R₅ is a group -(CH₂)ₘ-O-R₆-, in accordance with equation 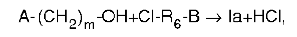
(4) if R₅ is a group -(CH₂)ₘ-CO-X-(CH₂)ₙ-, in accordance with equation 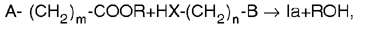
(5) if R₅ is a group -(CH₂)ₘ-CO-X-(CH₂)ₙ-O-, in accordance with equation 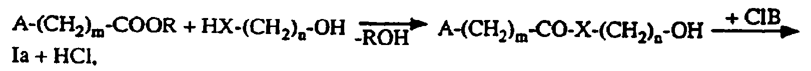
(6) if R₅ is a group 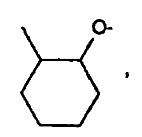 , in accordance with equation 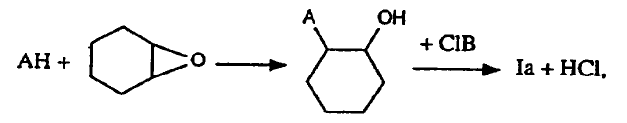
(7) if R₅ is a group -CH₂-CH(R₇)-O-, in accordance with equation 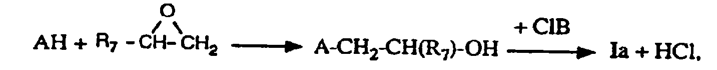
(8) if R₅ is a group -CH₂-CH(OR₈)-CH₂O-, in accordance with equation 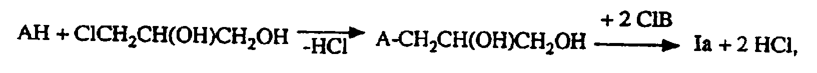
(9) if R₅ is a group 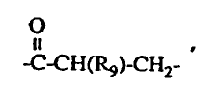 in accordance with equation 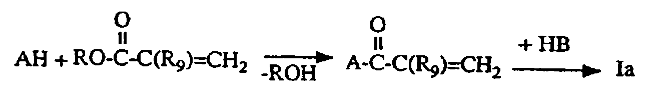 or alternatively in accordance with 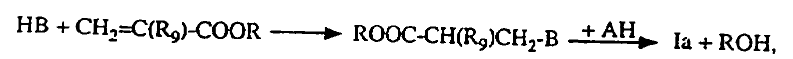 and (10), if R₅ is a group -CH₂-CH(OH)-CH₂-Y-(CH₂)ₙ-, in accordance with equation 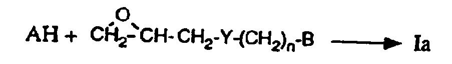 where A is a triazine group of the formula 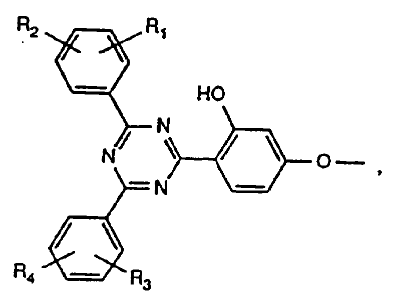 B is a silyl group of the formula 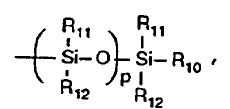 R is C₁-C₂alkyl, and p, R₁ to R₁₂, X and Y are as defined in claim 1.

16. A process for the preparation of a compound of formula lb defined in claim 1, in which r is greater than 1, which comprises subjecting dialkoxy- or dichlorosilanes of formula IV 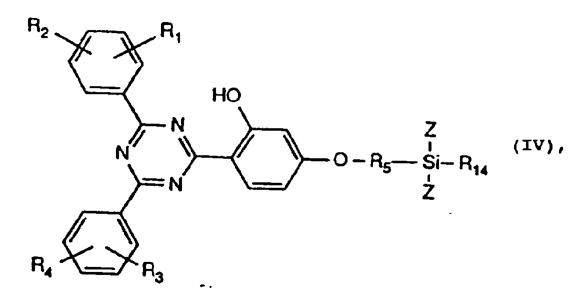 wherein Z is C₁-C₄alkoxy or a chlorine atom and R₁, R₂, R₃, R₄, R₅ and R₁₄, are as defined in claim 1, to hydrolysis and subsequent condensation.

## Revendications (Revendications pour l'(les) Etat(s) contractant(s) suivant(s) : BE, DE, FR, GB, IT, NL, SE)

1. Composé de formule la ou de formule lb 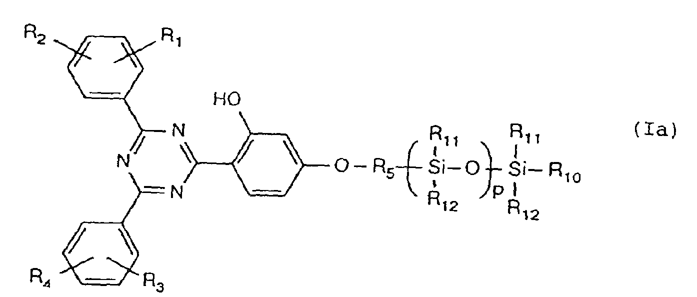 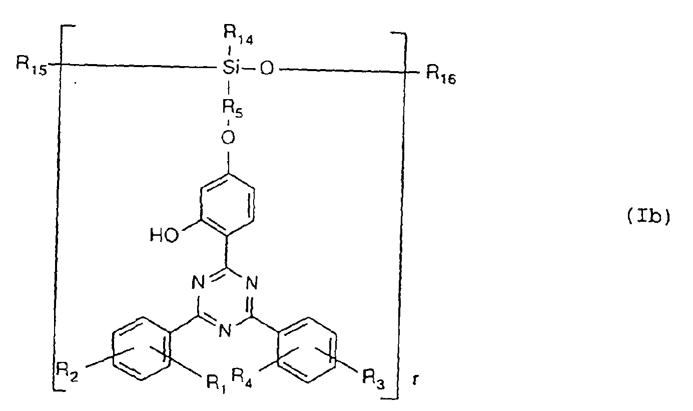 dans lesquelles p vaut 0 ou un nombre entier de 1 à 50, r va de 1 à 50,
R₁ et R₃, indépendamment l'un de l'autre, sont l'hydrogène, OH, alkyle en C₁-C₁₂ ou cyclohexyle,
R₂ et R₄, indépendamment l'un de l'autre, sont l'hydrogène, OH, alkyle en C₁-C₁₂, alcoxy en C₁-C₁₈, halogène ou un groupe -O-ll 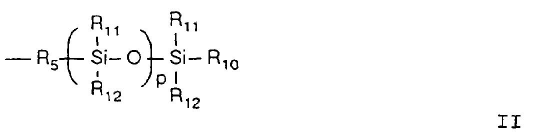
R₅ représente une liaison directe ou un groupe bivalent répondant à l'une des formules suivantes -CₘH₂ₘ-, -(CH₂)ₘ-O-, (CH₂)ₘ-O-R₆-, -(CH₂)ₘ-CO-X-(CH₂)N-, -(CH₂)ₘ-CO-X-(CH₂)ₙ-O-, 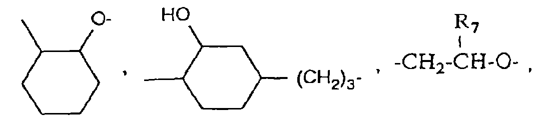 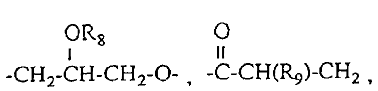 -CH₂-CH(OH)-CH₂-Y-(CH₂)ₘ-,
dans lesquelles m et n, indépendamment l'un de l'autre, valent de 1 à 4,
R₆ représente alkylène en C₁-C₁₂, cyclohexylène ou phénylène,
R₇ représente alkyle en C₁-C₁₂, cycloalkyle en C₅-C₈, phényle, (alcoxy en C₂-C₁₃)-méthyle, (cycloalcoxy en C₆-Cg)-méthyle ou phénoxyméthyle,
R₈ représente un groupe de formule ll,
Rg représente l'hydrogène ou méthyle,
X représente -O-ou -NR₁₃-, dans laquelle R₁₃ représente l'hydrogène, alkyle en C₁-C₁₂, phényle ou un groupe
- (CH₂)₃-ll ou - (CH₂)₃-O-ll,
Y représente -O- ou -NH-,
R₁₀, R₁₁ et R₁₂, indépendamment l'un de l'autre, représentent alkyle en C₁-C₁₈, cyclohexyle, phényle ou alcoxy en C₁-C₈ et dans le cas où R₂ et R₄ ne sont pas un groupe -O-ll, R₁₀ et/ou R₁₁ peuvent aussi représenter un groupe de formule lll 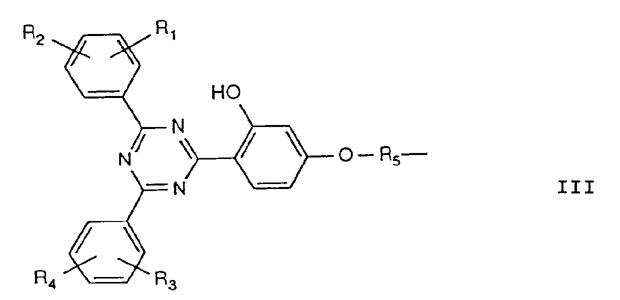
R₁₄ représente alkyle en C₁-C₁₂, cycloalkyle en C₅-C₈ ou phényle, et
R₁₅ représente hydroxy ou alcoxy en C₁-C₄ et R₁₆ représente l'hydrogène ou alkyle en C₁-C₄, ou, dans le cas où r est supérieur à 2, R₁₅ et R₁₆ ensemble peuvent représenter une liaison directe.

2. Composé de formule la selon la revendication 1 dans lequel R₅ représente une liaison directe ou un groupe bivalent de l'une des formules ci-après -(CH₂)ₘ-, -(CH₂)ₘ-O-, -(CH₂)ₘ-O-R₆-, -(CH₂)ₘ-CO-X-(CH₂)ₙ, -(CH₂)ₙ-CO-X-(CH₂)ₙ-O-, 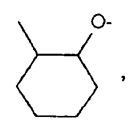 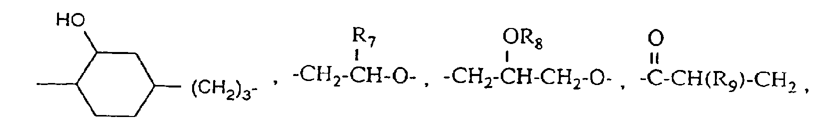 -CH₂-CH(OH)-CH₂-Y-(CH₂)ₘ-, dans lesquelles m et n, indépendamment l'un de l'autre, vont de 1 à 4.

3. Composé selon la revendication 1 de formule la ou de formule lb dans lequel R₁, R₂, R₃ et R₄, indépendamment l'un de l'autre, représentent hydrogène ou méthyle.

4. Composé de formule la ou de formule lb selon la revendication 1 dans lequel R₁₀, R₁₁ et R₁₂, indépendamment l'un de l'autre, représentent alkyle en C₁-C₈, phényle ou alcoxy en C₁-C₈ et R₁₄ représente alkyle en C₁-C₈ ou phényle, et dans le cas où R₂ et R₄ ne sont pas un groupe de formule ll R₁₀ et/ou R₁₁ peuvent aussi être un groupe de formule lll.

5. Composé de formule la ou de formule lb selon la revendication 4 dans lequel R₁₀, R₁₁ et R₁₂, indépendamment l'un de l'autre, représentent alkyle en C₁-C₄ ou alcoxy en C₁-C₄ et R₁₄ représente alkyle en C₁-C₄.

6. Composé de formule la ou de formule lb selon la revendication 1 dans lequel R₅ est un des groupes -CₘH₂ₘ-, - (CH₂)ₘ-O-, -(CH₂)ₘ-CO-X-(CH₂)ₙ-, 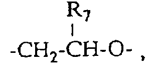 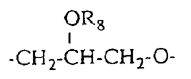 ou -CH₂-CH(OH)-CH₂-Y-(CH₂)ₘ-dans lesquels m vaut 1 2 ou 3, R7 représente méthyle, phényle, (alcoxy en C₃-C₉) -méthyle ou phénoxyméthyle, R8 représente un groupe de formule ll et X et Y sont chacun oxygène.

7. Composé de formule la ou de formule lb selon la revendication 6 dans lequel R₅ représente un groupe -CₘH₂ₘ-, -(CH₂)₂-O-, -CH₂-CO-O-CH₂-, -CH₂-CH(O-C₄H₉)-O-, 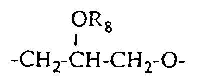 oder -CH₂-CH(OH)-CH₂-O-(CH₂)₃-
m vaut 1, 2 ou 3 et R₈ est un tert-butyl-diméthylsilyle.

8. Composé de formule la selon la revendication 1 dans lequel p vaut 0.

9. Composé de formule la et de formule lb selon la revendication 3 dans lequel R₁, R₂, R₃ et R₄ chacun sont en position o- et/ou p-, p vaut 0, Rₛ représente -(CH₂)₃-, R₁₀ représente méthyle ou éthyle, R₁₁ et R₁₂ représentent éthyle ou éthoxy, R₁₄ représente méthyle, R₁₅ représente -OH, méthoxy ou éthoxy, R₁₆ représente l'hydrogène, méthyle ou éthyle, et, dans le cas où r est supérieur à 2, R15 et R16 ensemble peuvent représenter une liaison directe.

10. Mélange de composés oligomères que l'on peut obtenir par hydrolyse et condensation des composés de formule la selon la revendication 1 dans lesquels p vaut 0 et R₁₀, R₁₁ et R₁₂ représentent alcoxy en C₁-C₈.

11. Utilisation des composés de formule la ou de formule lb selon la revendication 1 comme stabilisants pour polymères organiques contre la dégradation induite par la lumière, par l'oxygène et par la chaleur.

12. Utilisation selon la revendication 11 dans des vernis.

13. Polymère organique stabilisé contenant comme stabilisant contre la lumière, contre l'oxygène et contre la chaleur au moins un composé de formule la et/ou de formule lb selon la revendication 1.

14. Polymère stabilisé selon la revendication 13, caractérisé en ce que le polymère est un liant pour un vernis.

15. Polymère stabilisé selon la revendication 13, caractérisé en ce que le polymère contient en outre un ou plusieurs autres stabilisants et/ou d'autres additifs.

16. Polymère stabilisé selon la revendication 15, caractérisé en ce que le polymère contient en outre un photoprotecteur de la classe des amines à encombrement stérique et/ou de la classe du 2-(2'-hydroxyphényl)-benzotriazoles.

## Revendications (Revendications pour l'(les) Etat(s) contractant(s) suivant(s) : ES)

1. Composition contenant
(a) un polymère organique et
(b) au moins un composé de formule la ou lb 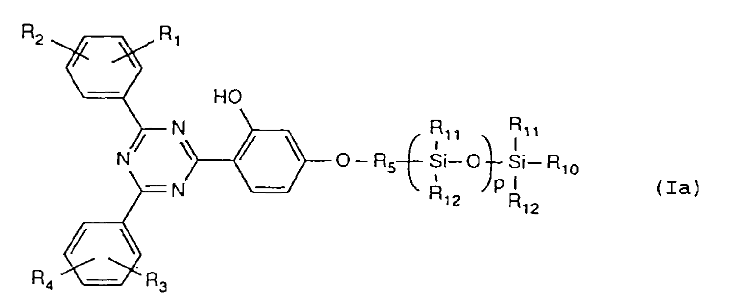 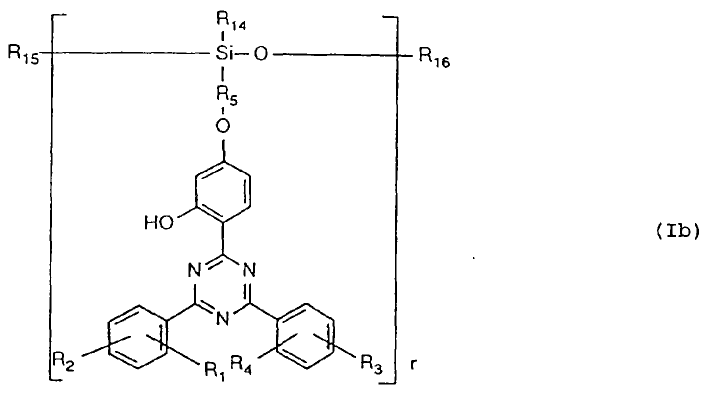 dans lesquelles p vaut 0 ou un nombre entier de 1 à 50, r va de 1 à 50,
R, et R₃, indépendamment l'un de l'autre, sont l'hydrogène, OH, alkyle en C₁-C₁₂ ou cyclohexyle,
R₂ et R₄, indépendamment l'un de l'autre, sont l'hydrogène, OH, alkyle en C₁-C₁₂, alcoxy en C₁-C₁₈, halogène ou un groupe -O-ll 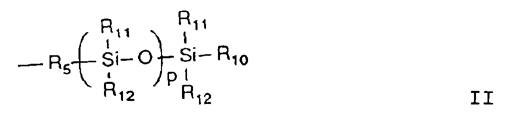
R₅ représente une liaison directe ou un groupe bivalent répondant à l'une des formules suivantes
-CₘH₂ₘ-, -(CH₂)ₘ-O-, -(CH₂)ₘ-O-R₆-, -(CH₂)ₘ-CO-X-(CH₂)ₙ-, -(CH₂)ₘ-CO-X-(CH₂)ₙ-O-, 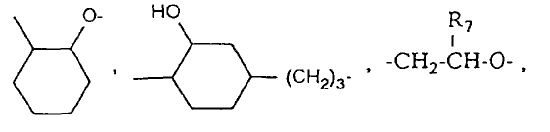 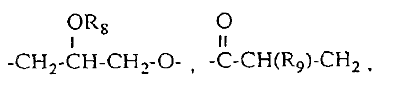
-CH₂-CH(OH)-CH₂-Y-(CH₂)ₘ-, dans lesquelles m et n, indépendamment l'un de l'autre, valent de 1 à 4,
R₆ représente alkylène en C₁-C_{12;} cyclohexylène ou phénylène,
R₇ représente alkyle en C₁-C₁₂, cycloalkyle en C₅-C₈, phényle, (alcoxy en C₂-C₁₃)-méthyle, (cycloalcoxy en C₆-Cg)-méthyle ou phénoxyméthyle,
R₈ représente un groupe de formule ll,
Rg représente l'hydrogène ou méthyle,
X représente -O-ou -NR₁₃-, dans laquelle R₁₃ représente l'hydrogène, alkyle en C₁-C₁₂, ou un groupe -(CH₂)₃-ll OU -(CH₂)₃-O-ll,
Y représente -O- ou -NH-,
R₁₀, R₁₁ et R₁₂, indépendamment l'un de l'autre, représentent alkyle en C₁-C₁₈, cyclohexyle, phényle ou alcoxy en C₁-C₁₈ et dans le cas où R₂ et R₄ ne sont pas un groupe -O-ll, R₁₀ et/ou R₁₁ peuvent aussi représenter un groupe de formule lll 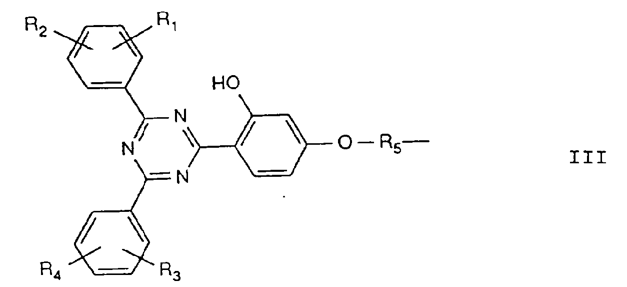
R₁₄ représente alkyle en C₁-C₁₂, cycloalkyle en C₅-C₈ ou phényle, et
R₁₅ représente hydroxy ou alcoxy en C₁-C₄ et R₁₆ représente l'hydrogène ou alkyle en C₁-C₄, ou, dans le cas où r est supérieur à 2, R₁₅ et R₁₆ ensemble peuvent représenter une liaison directe.

2. Composition selon la revendication 1 contenant un composé de formule la où Rₛ représente une liaison directe ou un groupe bivalent de l'une des formules ci-après -(CH₂)ₘ-, -(CH₂)ₘ-O-, -(CH₂)ₘ-O-R₆, -(CH₂)ₘ-CO-X-(CH₂)ₙ-, - (CH₂)ₘ-CO-X-(CH₂)ₙ-O-, 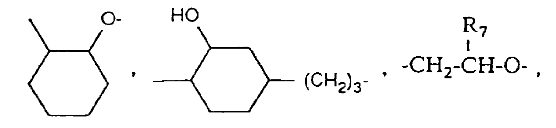 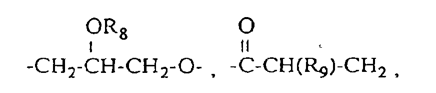 -CH₂-CH(OH)-CH₂-Y-(CH₂)ₘ-, dans lesquelles m et n, indépendamment l'un de l'autre, vont de 1 à 4.

3. Composition selon la revendication 1 contenant un composé de formule la ou de formule lb où R₁, R₂, R₃ et R₄, indépendamment l'un de l'autre, représentent hydrogène ou méthyle.

4. Composition selon la revendication 1 contenant un composé de formule la ou de formule lb où R₁₀, R₁₁ et R₁₂, indépendamment l'un de l'autre, représentent alkyle en C₁-C₈, phényle ou alcoxy en C₁-C₈ et R₁₄ représente alkyle en C₁-C₈ ou phényle, et dans le cas où R₂ et R₄ ne sont pas un groupe de formule ll, R₁₀ et/ou R₁₁ peuvent aussi être un groupe de formule lll.

5. Composition selon la revendication 4 contenant un composé de formule la ou de formule lb où R₁₀, R₁₁ et R₁₂, indépendamment l'un de l'autre, représentent alkyle en C₁-C₄ ou alcoxy en C₁-C₄ et R₁₄ représente alkyle en C₁-C₄.

6. Composition selon la revendication 1 contenant un composé de formule la ou de formule Ib où Rₛ est un des groupes -CₘH₂ₘ-, -(CH₂)ₘ-O-, (CH₂)ₘ-CO-X-(CH₂)ₙ-, 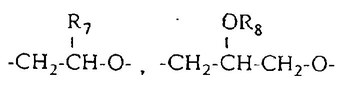 ou -CH₂-CH(OH)-CH₂-Y-(CH₂)ₘ- dans lesquels m vaut 1,2 ou 3, R₇ représente méthyle, phényle, (alcoxy en C₃-C₉) -méthyle ou phénoxyméthyle, R₈ représente un groupe de formule Il et X et Y sont chacun oxygène.

7. Composition selon la revendication 6 contenant un composé de formule la ou de formule lb où R₅ représente un groupe -CₘH₂ₘ-, -(CH₂)₂-O-,-CH₂-CO-O-CH₂-, -CH₂-CH(O-C₄H₉)-O-, 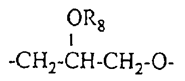 ou -CH₂-CH(OH)-CH₂-O-(CH₂)₃-m vaut 1, 2 ou 3 et R₈ est un tert-butyl-diméthylsilyle.

8. Composition selon la revendication 1 contenant un composé de formule la où p vaut 0.

9. Composition selon la revendication 3 contenant un composé de formule la et de formule lb où R₁, R₂, R₃ et R₄ chacun sont en position o- et/ou p-, p vaut 0, R₅ représente -(CH₂)₃-, R₁₀ représente méthyle ou éthyle, R₁₁ et R₁₂ représentent éthyle ou éthoxy, R₁₄ représente méthyle, R₁₅ représente -OH, méthoxy ou éthoxy, R₁₆ représente l'hydrogène, méthyle ou éthyle, et, dans le cas où r est supérieur à 2, R₁₅ et R₁₆ ensemble peuvent représenter une liaison directe.

10. Composition selon la revendication 1 contenant au côté des constituants (a) et (b) un ou plusieurs autres stabilisants et/ou d'autres additifs.

11. Composition selon la revendication 11, caractérisée en ce qu'elle contient comme autre stabilisant et/ou d'autres additifs un photoprotecteur pris dans la classe des amines à encombrement stérique et/ou dans la classe des 2-(2'-hydroxyphényl)-benzotriazoles.

12. Composition selon la revendication 1, dans laquelle le constituant (b) est un mélange de composés oligomères que l'on obtient par hydrolyse et condensation des composés de formule la selon la revendication 1 où p vaut 0 et R₁₀, R₁₁ et R₁₂ représentent alcoxy en C₁-C₁₈.

13. Procédé pour la stabilisation des polymères organiques contre la dégradation induite par la lumière, par l'oxygène et par la chaleur caractérisé en ce qu'on ajoute par mélange à ces matières au moins un composé de formule la et/ou de formule lb selon la revendication 1.

14. Procédé selon la revendication 13 dans lequel le polymère organique est un liant pour un vernis.

15. Procédé pour la préparation des composés de formule la définis dans la revendication 1, caractérisé en ce que
(1) lorsque R₅ est un groupe -CₘH₂ₘ-, selon l'équation de la réaction 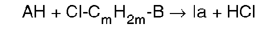 ou 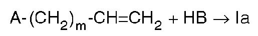
(2) lorsque R₅ est un groupe -(CH₂)ₘ-O-, selon l'équation de la réaction 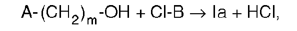
(3) lorsque R₅ est un groupe -(CH₂)ₘ-O-R₆-, selon l'équation de la réaction 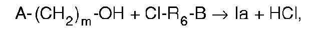
(4) lorsque R₅ est un groupe -(CH₂)ₘ-CO-X-(CH₂)ₙ, selon l'équation de la réaction 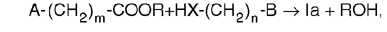
(5) lorsque R₅ est un groupe -(CH₂)ₘ-CO-X-(CH₂)n-Oselon l'équation de la réaction 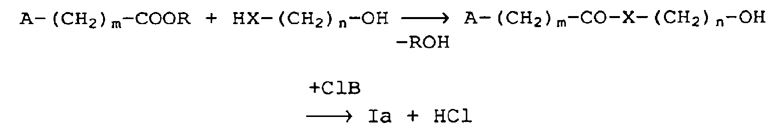
(6) lorsque R₅ est un groupe 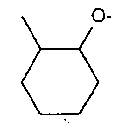 selon l'équation de la réaction 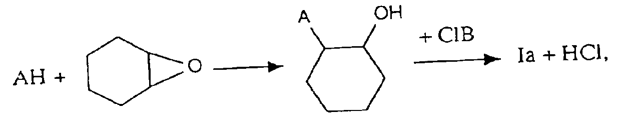
(7) lorsque R₅ est un groupe -CH₂-CH(R₇)-O-, selon l'équation de la réaction 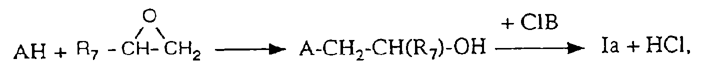 (8) lorsque R₅ est un groupe -CH₂-CH(OR₈)-CH₂O, selon l'équation de la réaction 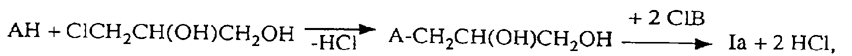
(9) lorsque R₅ est un groupe 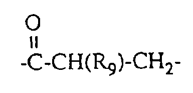 selon l'équation de la réaction 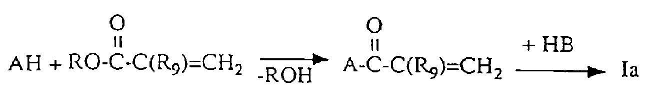 ou alternativement selon 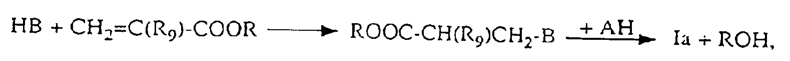 et (10), lorsque R₅ est un groupe -CH₂-CH(OH)-CH₂-Y-(CH₂)n-, selon l'équation de la réaction 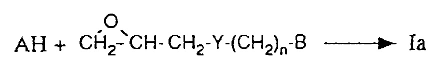 A étant un groupe triazine de formule 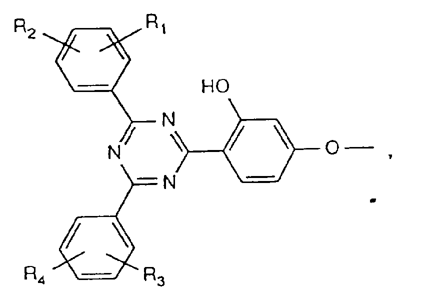 B étant un groupe silyle de formule 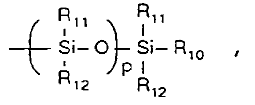 R représente alkyle en C₁-C₂ et p, R₁ à R₁₂, X et Y ont la signification donnée dans la revendication 1.

16. Procédé pour la préparation des composés de formule lb définis dans la revendication 1, dans lesquels r est supérieur à 1, caractérisé en ce que les dialcoxy- ou dichlorosilanes de formule IV 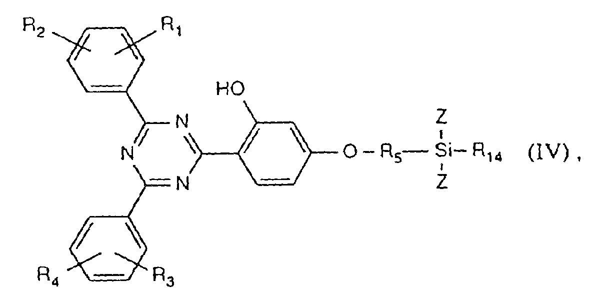 dans laquelle Z représente alcoxy en C₁-C₄ ou un atome de chlore et R₁, R₂, R₃, R₄, Rₛ et R₁₄ ont la signification donnée dans la revendication 1, sont traités par hydrolyse et condensation ultérieures.
